(19)

Europäisches
Patentamt
European
Patent Office
Office européen
des brevets

(11)  **EP 2 559 729 A1**

(12)  **EUROPEAN PATENT APPLICATION**
published in accordance with Art. 153(4) EPC

(43) Date of publication:
**20.02.2013  Bulletin 2013/08**

(21) Application number: **11768927.3**

(22) Date of filing: **14.04.2011**

(51) Int Cl.:
*C08L 23/08* (2006.01)     *C08K 5/00* (2006.01)
*C08L 27/18* (2006.01)

(86) International application number:
**PCT/JP2011/059299**

(87) International publication number:
**WO 2011/129406 (20.10.2011 Gazette 2011/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2010  JP 2010095262**

(71) Applicant: **Asahi Glass Company, Limited
Tokyo 100-8405 (JP)**

(72) Inventor: **NAKANO, Takashi
Tokyo 100-8405 (JP)**

(74) Representative: **Müller-Boré & Partner
Patentanwälte
Grafinger Straße 2
81671 München (DE)**

(54)  **FLUORINE-CONTAINING COPOLYMER COMPOSITION AND PRODUCTION METHOD FOR SAME**

(57)  To provide a composition of a fluorinated copolymer containing repeating units derived from ethylene and TFE, which can be used for e.g. production of a thin film by coating and which can be produced at a relatively low temperature, and a process for producing such a fluorinated copolymer composition at a relatively low temperature. A fluorinated copolymer composition comprising a fluorinated copolymer (hereinafter ETFE) containing repeating units derived from ethylene and repeating units derived from tetrafluoroethylene, and a medium mixture composed of at least two members selected from media, each of which does not by itself dissolve ETFE in a concentration of at least 1 mass% at a temperature of not higher than the melting point of ETFE, and having a temperature range to exhibit a uniform solution state at a temperature of not higher than the melting point of ETFE, wherein the medium mixture has a specific value as the dissolution index for ETFE based on Hansen solubility parameters.

EP 2 559 729 A1

**Description**

TECHNICAL FIELD

The present invention relates to a fluorinated copolymer composition which can be used for production of a thin film by coating, and a process for its production.

BACKGROUND ART

Fluororesins are excellent in solvent resistance, low dielectric constant, low surface energy, non-tackiness, weather resistance, etc. and therefore are used for various applications for which common plastics may not be useful. Among them, an ethylene/tetrafluoroethylene copolymer (hereinafter tetrafluoroethylene may be referred to as "TFE", and an ethylene/tetrafluoroethylene copolymer may be referred to as "ETFE") is excellent in heat resistance, flame retardancy, chemical resistance, weather resistance, low frictional properties, low dielectric constant properties, transparency, etc. and therefore is used in a wide range of fields including covering material for heat resistance wires, corrosion resistant piping for chemical plants, material for plastic greenhouses for agriculture, mold release films, etc.
However, as is different from polyvinylidene fluoride which dissolves in e.g. N-methylpyrrolidone, ETFE is usually insoluble in a solvent and thus cannot be formed into a thin film by coating, and its forming method has been limited to a melt process such as extrusion molding, injection molding or powder coating.
Heretofore, some attempts to obtain a solution of ETFE have been reported. An ETFE solution has been obtained by using a dicarboxylic acid diester such as diisobutyl adipate as a solvent, but the dissolution temperature is required to be as high as 230°C, from 260 to 265°C or 290°C (Patent Documents 1, 2 and 3). Further, a case has also been reported wherein a low molecular weight chlorotrifluoroethylene polymer is used as a solvent, but also in this case, heating is required to a temperature in the vicinity of the melting point of the polymer.
Further, the solvent disclosed in Patent Document 4 has a boiling point as high as from 220 to 290°C and thus is not suitable to be used for coating, and it is disclosed that an ETFE solution obtained by using this solvent undergoes coagulation and loses fluidity in the vicinity of room temperature (Patent Document 4).
On the other hand, cases have been reported wherein ketones, hydrofluorocarbons, etc. are used as solvents under high temperature high pressure conditions to carry out flash spinning. However, in each case, the operation is carried out under a very high pressure condition of at least 13 MPa, whereby a special apparatus is required, and its application to other uses is difficult, i.e. it is, for example, difficult to apply such an operation to formation of a thin film or membrane, or for the production of porous materials such as hollow fibers using a phase separation method (Patent Document 5).
Thus, such conventional cases can hardly be regarded as readily useful for a practical operation, and no technique or method has been known to obtain a solution of ETFE easy to handle, at a relatively low temperature.

PRIOR ART DOCUMENTS

PATENT DOCUMENTS

    Patent Document 1: U.S. Patent No. 2,412,960
    Patent Document 2: U.S. Patent No. 2,448,952
    Patent Document 3: U.S. Patent No. 2,484,483
    Patent Document 4: U.S. Patent No. 4,933,388
    Patent Document 5: JP-A-2000-503731

DISCLOSURE OF INVENTION

TECHNICAL PROBLEM

The present invention has been made in view of the above situation, and it is an object of the present invention to provide a composition of a fluorinated copolymer containing repeating units derived from ethylene and TFE, which can be used for e.g. production of a thin film by coating and which can be produced at a relatively low temperature, and a process for producing such a fluorinated copolymer composition at a relatively low temperature.

SOLUTION TO PROBLEM

The present invention provides a fluorinated copolymer composition and a process for its production, having the following constructions.

[1] A fluorinated copolymer composition comprising a fluorinated copolymer containing repeating units derived from ethylene and repeating units derived from tetrafluoroethylene, and a medium mixture composed of at least two members selected from media, each of which does not by itself dissolve the fluorinated copolymer in a concentration of at least 1 mass% at a temperature of not higher than the melting point of the fluorinated copolymer, and having a temperature range to exhibit a uniform solution state at a temperature of not higher than the melting point of the fluorinated copolymer, wherein, of the medium mixture, the dissolution index (R) for the fluorinated copolymer, based on Hansen solubility parameters and represented by the following formula (1), is less than 25:

$$R=4\times(\delta d-15.7)^2+(\delta p-5.7)^2+(\delta h-4.3)^2 \quad (1)$$

wherein δd, δp and δh represent the dispersion component, the polar component and the hydrogen bonding component, respectively, in Hansen solubility parameters, and their units are $(MPa)^{1/2}$, respectively.

[2] The fluorinated copolymer composition according to the above [1], wherein the medium mixture is composed of a combination of at least one member selected from non-polar media, of which the index (S) based on Hansen solubility parameters and represented by the following formula (2) is less than 6, and at least one member selected from polar media, of which the above index (S) is at least 6, a combination of at least two members selected from the above non-polar media, or a combination of at least two members selected from the above polar media:

$$S=(\delta p^2+\delta h^2)^{1/2} \quad (2)$$

wherein δp and δh represent the polar component and the hydrogen bonding component, respectively, in Hansen solubility parameters, and their units are $(MPa)^{1/2}$, respectively.

[3] The fluorinated copolymer composition according to the above [2], wherein the non-polar media are at least one member selected from the group consisting of a $C_{1-20}$ aliphatic hydrocarbon which may have a halogen atom and/or an etheric oxygen atom, and a $C_{6-20}$ aromatic hydrocarbon which may have a halogen atom.

[4] The fluorinated copolymer composition according to the above [2] or [3], wherein the polar media are at least one member selected from the group consisting of a $C_{1-20}$ aliphatic hydrocarbon which may have a halogen atom and/or an etheric oxygen atom (said aliphatic hydrocarbon contains at least one polar group selected from the group consisting of a hydroxyl group, a carboxy group, a cyclic ester, a cyclic carbonate, a cyano group, a nitro group, an amido group, an amino group, a urea group, a sulfide group, a sulfoxide group, a sulfone group, a sulfonic acid group, a sulfonic acid ester group, and a phosphoric acid ester group), and a $C_{4-20}$ aromatic hydrocarbon which may have a halogen atom (said aromatic hydrocarbon contains at least one polar group selected from the group consisting of a hydroxyl group, a carboxy group, an ester group, a ketone group, an ether group, a cyano group, a nitro group, an amido group, an amino group, a sulfide group, a sulfoxide group, a sulfone group, a sulfonic acid group and a sulfonic acid ester group).

[5] The fluorinated copolymer composition according to any one of the above [1] to [4], wherein the boiling point of the medium mixture is at least 50°C and at most 230°C.

[6] The fluorinated copolymer composition according to any one of the above [1] to [5], wherein the dissolution temperature being the lower limit temperature within the temperature range for the fluorinated copolymer composition to exhibit the solution state, is not higher than 230°C.

[7] The fluorinated copolymer composition according to any one of the above [2] to [6], wherein the non-polar media are at least one member selected from the group consisting of an aliphatic hydrocarbon, an aliphatic hydrochlorocarbon, an aliphatic hydrofluorocarbon, an aliphatic hydrochlorofluorocarbon, an aliphatic hydrofluoroether, an aromatic hydrocarbon and an aromatic hydrochlorocarbon.

[8] The fluorinated copolymer composition according to any one of the above [2] to [7], wherein the polar media are at least one member selected from the group consisting of an aliphatic alcohol, a fluorinated aliphatic alcohol, an aliphatic carboxylic acid, an aliphatic lactone, an alicyclic carbonate, an aliphatic nitrile, a nitroalkane, an aliphatic amide, an aliphatic amine, an aliphatic urea compound, an aliphatic sulfide, an aliphatic sulfoxide, an aliphatic sulfone, an aliphatic sulfonic acid, an aliphatic sulfonic acid ester, an aliphatic sultone, an aliphatic phosphoric acid ester, a phenol, an aromatic carboxylic acid, an aromatic ester, an aromatic ketone, an aromatic ether, an aromatic nitrile, an aromatic nitro compound, an aromatic amide, an aromatic amine, an aromatic sulfide, an aromatic sulfoxide, an aromatic sulfone, an aromatic sulfonic acid and an aromatic sulfonic acid ester.

[9] The fluorinated copolymer composition according to any one of the above [1] to [8], wherein within the temperature range for the fluorinated copolymer composition to exhibit the solution state, the vapor pressure of the solution is within a range of at least not higher than naturally occurring pressure.

[10] A process for producing the fluorinated copolymer composition as defined in any one of the above [1] to [9], which has a step of dissolving the fluorinated copolymer containing repeating units derived from ethylene and repeating units derived from tetrafluoroethylene, in the medium mixture at a temperature of not higher than the melting point of the fluorinated copolymer.

[11] The process for producing the fluorinated copolymer composition according to the above [10], wherein said temperature is a temperature lower by at least 30°C than the melting point of the fluorinated copolymer.

ADVANTAGEOUS EFFECT OF INVENTION

According to the present invention, it is possible to produce, at a relatively low temperature, a composition of a fluorinated copolymer containing repeating units derived from ethylene and TFE. Further, by using such a composition of a fluorinated copolymer containing repeating units derived from ethylene and TFE, of the present invention, it becomes possible to form various molded products such as thin films, films, tubes, etc.

DESCRIPTION OF EMBODIMENTS

Now, embodiments of the present invention will be described in detail.

[Fluorinated copolymer composition]

Now, the fluorinated copolymer composition of the present invention (hereinafter sometimes referred to as "the composition") will be described which comprises a fluorinated copolymer containing repeating units derived from ethylene and repeating units derived from tetrafluoroethylene, and a medium mixture which is composed of at least two members selected from media, each of which does not by itself dissolve the fluorinated copolymer in a concentration of at least 1 mass% at a temperature of not higher than the melting point of the fluorinated copolymer, and which has a dissolution index (R) of less than 25 for the fluorinated copolymer, based on Hansen solubility parameters and represented by the above formula (1), the composition having a temperature range to exhibit a uniform solution state at a temperature of not higher than the melting point of the fluorinated copolymer.

Here, in this specification, the "solution" having the fluorinated copolymer dissolved in the medium mixture means that the mixture of the fluorinated copolymer and the above medium mixture is in a transparent uniform state as visually observed after sufficient mixing, in a temperature range of not higher than the melting point of the fluorinated copolymer, and the composition in such a state is referred to as a solution having the fluorinated copolymer dissolved in the medium mixture.

Further, the "dissolution temperature" is the lower limit temperature in the temperature range where the composition of the present invention shows a solution state and is meant for a temperature measured by the following method. That is, to the medium mixture, the fluorinated copolymer is added, followed by heating to raise the temperature while maintaining a sufficiently mixed state constantly by e.g. a stirring means, whereby whether or not the fluorinated copolymer has dissolved, is visually observed. Firstly, a temperature at which the mixture is observed as completely dissolved in the form of a transparent uniform solution, is confirmed. Then, the solution is once gradually cooled to confirm a temperature at which the solution becomes turbid and further re-heated, whereby a temperature at which a transparent uniform solution is again obtained, is taken as the dissolution temperature.

<1> Fluorinated copolymer

The fluorinated copolymer in the fluorinated copolymer composition of the present invention is not particularly limited so long as it is a fluorinated copolymer containing repeating units derived from ethylene and repeating units derived from tetrafluoroethylene. A specific example of such a fluorinated copolymer may, for example, be ETFE containing repeating units derived from ethylene and repeating units derived from tetrafluoroethylene, as the main repeating units in the copolymer. Here, in this specification, the term "ETFE" is one to be used as a general term for a fluorinated copolymer containing TFE and ethylene as the main repeating units in the copolymer, which may contain repeating units based on comonomers other than TFE and ethylene, as constituting units of the copolymer.

ETFE may be one wherein the molar ratio of repeating units derived from TFE/repeating units derived from ethylene is preferably from 70/30 to 30/70, more preferably from 65/35 to 40/60, most preferably from 60/40 to 40/60.

Further, ETFE may contain repeating units derived from other monomer other than TFE and ethylene, in addition to repeating units of TFE and ethylene. Such other monomer may, for example, be a fluoroethylene (provided that TFE is excluded) such as $CF_2=CFCl$ or $CF_2=CH_2$; a fluoropropylene such as $CF_2=CFCF_3$, $CF_2=CHCF_3$ or $CH_2=CHCF_3$; a polyfluoroalkylethylene having a $C_{2-12}$ fluoroalkyl group, such as $CF_3CF_2CH=CH_2$, $CF_3CF_2CF_2CF=CH_2$, $CF_3CF_2CF_2CF_2CH=CH_2$, $CF_3CF_2CF_2CF_2CF=CH_2$ or $CF_2HCF_2CF_2CF=CH_2$; a perfluorovinyl ether such as $R^f$ $(OCFXCF_2)_mOCF=CF_2$ (wherein $R^f$ is a $C_{1-6}$ perfluoroalkyl group, X is a fluorine atom or a trifluoromethyl group, and m is an integer of from 0 to 5) $CF_2=CFCF_2OCF=CF_2$ or $CF_2=CF(CF_2)_2OCF=CF_2$; a perfluorovinyl ether having a group which can easily be converted to a carboxylic acid group or a sulfonic acid group, such as $CH_3OC(=O)CF_2CF_2CF_2OCF=CF_2$ or $CSO_2CF_2CF_2OCF(CF_3)CF_2OCF=CF_2$; an olefin (provided that ethylene is excluded), such as a $C_3$ olefin having three carbon atoms such as propylene, a $C_4$ olefin having four carbon atoms such as butylene or isobutylene, 4-methyl-1-pentene, cyclohexene, styrene, or $\alpha$-methylstyrene; a vinyl ester, such as vinyl acetate, vinyl lactate, vinyl butyrate, vinyl pivalate, or vinyl benzoate, an allyl ester such as allyl acetate; a vinyl ether such as methyl vinyl ether, ethyl vinyl ether, butyl vinyl ether, isobutyl vinyl ether, tert-butyl-vinyl ether, cyclohexyl vinyl ether, 2-hydroxyethyl vinyl ether, 4-hydroxybutyl vinyl ether, polyoxyethylene vinyl ether, 2-aminoethyl vinyl ether, or glycidyl vinyl ether; a (meth)acrylic acid ester such as methyl (meth)acrylate, ethyl (meth)acrylate, n-butyl (meth)acrylate, isobutyl (meth) acrylate, cyclohexyl (meth)acrylate, 2-hydroxyethyl (meth)acrylate, 4-hydroxybutyl (meth)acrylate, 2-aminoethyl (meth) acrylate, glycidyl (meth)acrylate, 2-isocyanate ethyl (meth)acrylate, 3-(trimethoxysilyl)propyl (meth)acrylate, or 3-(triethoxysilyl)propyl (meth)acrylate; a (meth)acrylamide, such as (meth)acrylamide, N-methyl (meth)acrylamide, or N,N-dimethyl (meth)acrylamide; a cyano group-containing monomer such as acrylonitrile; a diene such as isoprene or 1,3-butadiene; a chloroolefin such as vinyl chloride or vinylidene chloride; a vinyl compound containing a carboxylic anhydride such as maleic anhydride, itaconic anhydride, citraconic anhydride or 5-norbornene-2,3-dicarboxylic anhydride. These comonomers may be used alone or in combination as a mixture of two or more of them.

In a case where ETFE contains repeating units derived from such other monomers in addition to repeating units derived from TFE and ethylene, the proportion of their content is preferably at most 50 mol%, more preferably from 0.1 to 30 mol%, most preferably from 0.1 to 20 mol%, in repeating units derived from all monomers in ETFE.

As a process for producing the fluorinated copolymer in the composition of the present invention, it is possible to employ one wherein ethylene, TFE and further other monomers which may be optionally contained, are copolymerized by a usual method. The polymerization method may, for example, be solution polymerization, suspension polymerization, emulsion polymerization or bulk polymerization.

As the fluorinated copolymer in the present invention, it is also possible to employ a commercial product. Such commercial products of fluorinated copolymers e.g. ETFE may, for example, be Fluon (registered trademark) ETFE Series and Fluon (registered trademark) LM-ETFE Series, manufactured by Asahi Glass Company, Limited, Neoflon (registered trademark), manufactured by Daikin Industries, Ltd., Dyneon (registered trademark) ETFE, manufactured by Dyneon, Tefzel (registered trademark), manufactured by DuPont, etc. Further, the melting point of the fluorinated copolymer in the composition of the present invention is not particularly limited, but from the viewpoint of the solubility, strength, etc., it is preferably from 130 to 275°C, more preferably from 140 to 265°C, most preferably from 150 to 260°C.

It is possible to incorporate one of these fluorinated copolymers alone or two or more of them in combination, to the fluorinated copolymer composition of the present invention.

The content of the fluorinated copolymer in the fluorinated copolymer composition of the present invention is not particularly limited. From the viewpoint of the moldability at the time of obtaining a molded product, the content is preferably from 0.1 to 80 mass% based on the total amount of the composition. For example, in a case where a thin film is to be obtained by using the fluorinated copolymer composition of the present invention, the content of the fluorinated copolymer in the composition is preferably from 0.1 to 30 mass%, more preferably from 0.5 to 10 mass%, most preferably from 1 to 5 mass%, based on the total amount of the composition. When the content is within this range, the handling efficiency at the time of e.g. coating in the preparation of a thin film will be excellent, and it becomes possible to obtain a homogeneous thin film made of the fluorinated copolymer. Further, in a case where a fluorinated copolymer porous material is to be obtained from e.g. a tube of the fluorinated copolymer composition of the present invention without using a support member during the molding, the content of the fluorinated copolymer in the composition is preferably from 5 to 80 mass%, more preferably from 10 to 60 mass%, based on the total amount of the composition. The composition wherein the above content is within such a range, is excellent in the moldability into a molded product such as a film, a hollow fiber, etc. Further, from the obtained molded product, it is possible to obtain a fluorinated copolymer porous material having a narrow pore diameter distribution and high strength.

<2> Medium mixture

The fluorinated copolymer composition of the present invention contains the following medium mixture together with the above described fluorinated copolymer.

The medium mixture in the composition of the present invention is a medium mixture composed of at least two members selected from media, each of which does not by itself dissolve the fluorinated copolymer in a concentration of at least 1 mass% at a temperature of not higher than the melting point of the fluorinated copolymer and is a medium mixture, of which the dissolution index (R) for the fluorinated copolymer, based on Hansen solubility parameters and represented by the formula (1), as described hereinafter, is less than 25.

Each of the media constituting the medium mixture to be used in the present invention cannot by itself dissolve the fluorinated copolymer in a concentration of at least 1 mass% at a temperature of not higher than the melting point of the fluorinated copolymer. However, when two or more of them are combined to form the medium mixture, they are media which are capable of constituting a fluorinated copolymer composition which contains the fluorinated copolymer in a concentration of at least 1 mass% and which has a temperature range to show a uniform solution state at a temperature of not higher than the melting point of the fluorinated copolymer.

The medium mixture to be used in the present invention has a dissolution index (R) of less than 25 for the fluorinated copolymer, based on Hansen solubility parameters and represented by the following formula (1) and is a medium mixture to meet the above mentioned condition for uniformly dissolving the fluorinated copolymer in a temperature range of not higher than its melting point.

$$R=4\times(\delta d-15.7)^2+(\delta p-5.7)^2+(\delta h-4.3)^2 \qquad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

In the present invention, in order to select a medium mixture to meet the above condition, the above formula (1) representing a dissolution index (R) for the fluorinated copolymer is prepared by the following method based on Hansen solubility parameters, and a medium mixture having a polarity within a specific range such that the dissolution index (R) is less than 25, is regarded to meet the above condition.

Hansen solubility parameters are ones such that the solubility parameter introduced by Hildebrand is divided into three components of dispersion component $\delta d$, polar component $\delta p$ and hydrogen bonding component $\delta h$ and represented in a three dimensional space. The dispersion component $\delta d$ represents the effect by dispersion force, the polar component $\delta p$ represents the effect by dipolar intermolecular force, and the hydrogen bonding component $\delta h$ represents the effect by hydrogen bonding force.

The definition and calculation of Hansen solubility parameters are disclosed in "Hansen Solubility Parameter: A Users Handbook (CRC Press, 2007)", edited by Charles M. Hansen. Further, by using a computer software "Hansen Solubility Parameters in Practice (HSPiP)", also with respect to media, of which no parameter values, etc. are known in literatures, Hansen solubility parameters can be estimated simply from their chemical structures. In the present invention, a medium to be used is selected by using HSPiP version 3 by employing, with respect to a medium registered in the database, its values and employing, with respect to a medium not registered, its estimated values.

Usually, Hansen solubility parameters for a certain polymer can be determined by a solubility test wherein samples of such a polymer are dissolved in many different media, of which Hansen solubility parameters have already been known, and the solubilities are measured. Specifically, such a sphere (solubility sphere) is to be found out whereby all three dimensional points of the media which dissolved the polymer among the media used for the above solubility test are included inside of the sphere, and points of the media which did not dissolve the polymer are located outside the sphere, and the central coordinate of such a sphere is taken as Hansen solubility parameters for the polymer.

Here, in a case where Hansen solubility parameters of another medium not used for the measurement of Hansen solubility parameters of the above polymer are ($\delta d$, $\delta p$, $\delta h$), if the point represented by such coordinates is included inside of the solubility sphere of the above polymer, such a medium is considered to dissolve the above polymer. On the other hand, if such a coordinate point is located outside of the solubility sphere of the above polymer, such a medium is considered not to be able to dissolve the above polymer.

In the present invention, by utilizing such Hansen solubility parameters, diisopropyl ketone is selected as the most suitable medium capable of dissolving ETFE being the fluorinated copolymer contained in the fluorinated copolymer composition at a temperature of not higher than its melting point, and coordinates (15.7, 5.7 and 4.3) being its Hansen solubility parameters are adopted as the standards. And, a group of medium mixtures which are within a certain distance from the standard coordinates i.e. of which R represented by the above formula (1) is less than 25, are regarded as useful for a medium mixture to dissolve the fluorinated copolymer. That is, R being the value based on Hansen solubility parameters and represented by the above formula (1) is taken as the dissolution index for the fluorinated copolymer.

Of the medium mixture to be used in the present invention, the dissolution index (R) calculated by the above formula (1) using Hansen solubility parameter coordinates ($\delta d$, $\delta p$ and $\delta h$) of the medium mixture is less than 25, and R is preferably less than 16, more preferably less than 9. A medium mixture having Hansen solubility parameters, whereby R represented by the above formula (1) falls within such a range, has high affinity with the fluorinated copolymer and presents a high solubility to the copolymer.

Here, the medium mixture to be used in the present invention is a mixture of at least two media. To calculate Hansen solubility parameters of the medium mixture, average Hansen solubility parameters are obtained by the blend ratio (volume ratio) of media to be used, and by using them as the Hansen solubility parameters of the medium mixture, the above dissolution index (R) is calculated. Further, also in the case of a medium mixture of at least three media, the value of R to be calculated based on Hansen solubility parameters by the above formula (1) in the same manner, can be used as the dissolution index for ETFE.

Further, the above medium mixture to be used in the present invention may be used without practical problems, so long as the above fluorinated copolymer is liquid at a temperature where it is soluble in the medium mixture, and therefore, it is preferably liquid at room temperature. The melting point of the medium mixture is preferably not higher than 230°C.

If the melting point of the medium mixture exceeds 230°C, even if its mixture with the fluorinated copolymer is heated, it tends to be hardly made into a solution at the dissolution temperature. The melting point of the medium mixture is preferably at most 50°C, more preferably at most 20°C. When the melting point is within such a range, the handling efficiency at the time of dissolving the fluorinated copolymer will be excellent.

The boiling point of the medium mixture in the composition of the present invention is preferably the same or higher than the temperature in the step of dissolving the fluorinated copolymer in the medium mixture. However, in the present invention, in a case where dissolution of the fluorinated copolymer is carried out under naturally-occurring pressure, a medium mixture having a boiling point not higher than the temperature of the dissolving step may also be used. The "naturally-occurring pressure" is meant for a pressure which a mixture of the medium mixture and the fluorinated copolymer naturally shows in a closed container.

The medium mixture in the composition of the present invention may not necessarily be compatible with the fluorinated copolymer and may be separated into two or more phases at a temperature lower than the temperature for dissolving the fluorinated copolymer in the medium mixture. However, to be useful as a medium mixture to constitute the composition of the present invention, it is a necessary condition that even such a medium mixture becomes compatible with the fluorinated copolymer to form a single phase, when heated to a temperature of a certain level or higher.

The composition of the present invention becomes a transparent uniform solution when the fluorinated copolymer and the medium mixture are heated to a prescribed temperature in a closed container. The prescribed temperature is a temperature at which the operation can practically be easily carried out, i.e. not higher than the melting point of the fluorinated copolymer, preferably a temperature lower by at least 30°C than the melting point of the fluorinated copolymer, more preferably a temperature lower by at least 35°C than the melting point.

Whether soluble or not depends on the temperature and the dissolution index (R) of the medium mixture determined by the types of the non-polar media and/or polar media to be used and the mixing ratio, and the above mentioned compatibility at a certain temperature or higher and does not depend on the pressure. Accordingly, so long as the mixture of the medium mixture and the fluorinated copolymer reaches the prescribed temperature, the pressure at that time is not particularly limited.

In a case where a medium mixture composed of non-polar media and/or polar media having lower boiling points, is used, the naturally-occurring pressure becomes high. Therefore, from the viewpoint of safety and convenience, the boiling point of the medium mixture to be employed is preferably at least room temperature, more preferably at least 50°C, most preferably at least 80°C.

On the other hand, the upper limit value for the boiling point of the medium mixture is not particularly limited, but when used for coating, the upper limit is preferably 230°C, more preferably 180°C, particularly from the viewpoint of the handling efficiency and removability of the medium mixture at the time of isolating the fluorinated copolymer composition.

As mentioned above, the medium mixture to be used in the present invention is composed of at least two members selected from media, each of which does not by itself dissolve the fluorinated copolymer in a concentration of at least 1 mass% at a temperature of not higher than the melting point of the fluorinated copolymer. Specifically, it may be a medium mixture composed of a combination of at least one member selected from non-polar media, of which the index (S) based on Hansen solubility parameters and represented by the following formula (2) is less than 6, and at least one member selected from polar media, of which the above index (S) is at least 6, a combination of at least two members selected from the above non-polar media, or a combination of at least two members selected from the above polar media:

$$S=(\delta p^2+\delta h^2)^{1/2} \quad (2)$$

wherein $\delta p$ and $\delta h$ represent the polar component and the hydrogen bonding component, respectively, in Hansen solubility parameters, and their units are $(MPa)^{1/2}$, respectively.

The medium mixture to be used in the present invention is obtained by suitably combining at least two members selected from the above non-polar media and polar media so that the dissolution index (R) calculated by the above formula (1) becomes less than 25. As mentioned above, the dissolution index (R) of a medium mixture obtainable by mixing a plurality of media can easily be calculated by obtaining average Hansen solubility parameters of such media by the mixing ratio (volume ratio) of media used for the preparation of the medium mixture.

As mentioned above, the combination of media is not particularly limited so long as it is such a combination that the dissolution index (R) of the obtainable mixed media becomes less than 25. It may be a combination of at least one member selected from the above non-polar media and at least one member selected from the above polar media, a combination of at least two members selected only from the above non-polar media, or a combination of at least two members selected only from the above polar media (hereinafter these combinations may be generally referred to as "at least two members selected from non-polar media and/or polar media"). Further, the number of media to be combined is not particularly limited so long as the dissolution index (R) of the mixed media becomes less than 25.

(Non-polar media)

Among components capable of constituting the above medium mixture, non-polar media will be described below.

The non-polar media in the present invention are media, each of which does not by itself dissolve the fluorinated copolymer in a concentration of at least 1 mass% at a temperature of not higher than the melting point of the fluorinated copolymer, and are media, of which the index (S) based on Hansen solubility parameters and represented by the above formula (2) is less than 6.

In the composition of the present invention, each of such non-polar media does not by itself dissolve the fluorinated copolymer in a concentration of at least 1 mass% at a temperature of not higher than the melting point of the fluorinated copolymer. However, by mixing, to such a non-polar medium, another non-polar medium and/or the after described polar medium, the mixture may have a such a proper polarity that the dissolution index (R) represented by the above formula (1) is less than 25 and may dissolve the fluorinated copolymer at a temperature of not higher than the melting point of the fluorinated copolymer to form the fluorinated copolymer composition.

Such a non-polar medium is preferably liquid at room temperature, since if it is liquid at the temperature for dissolving the fluorinated copolymer in a medium mixture obtained by using it, it can be used without any practical problem. The melting point of such a non-polar medium is preferably at most 230°C.

If the melting point of the non-polar medium exceeds 230°C, even if a mixture of the fluorinated copolymer and the medium mixture is heated, it can hardly be made into a solution at the dissolution temperature. The melting point of a non-polar medium is preferably at most 50°C, more preferably at most 20°C. When the melting point is within such a range, the handling efficiency will be excellent at the time of dissolving the fluorinated copolymer.

The boiling point of such a non-polar medium in the composition of the present invention is preferably the same or higher than the temperature in the step of dissolving the fluorinated copolymer in the non-polar medium. However, in the present invention, in a case where the dissolution of the fluorinated copolymer is carried out under naturally-occurring pressure, it is also possible to employ non-polar media and polar media whereby the boiling point of a medium mixture composed of at least two members selected from non-polar media and/or polar media is not higher than the temperature in the dissolving step.

In the composition of the present invention, by heating the fluorinated copolymer and the medium mixture in a closed container at a predetermined temperature, a transparent uniform solution is obtainable at a temperature where the operation can practically be easily carried out, i.e. not higher than the melting point of the fluorinated copolymer, preferably at a temperature lower by at least 30°C than the melting point of the fluorinated copolymer. Whether soluble or not soluble depends only on the temperature and the dissolution index (R) determined by the types and mixing ratio of the non-polar media and/or polar media to be used, and does not depend on the pressure. Accordingly, so long as the mixture of the medium mixture and the fluorinated copolymer reaches a predetermined temperature, the pressure at that time is not particularly limited. In a case where non-polar media and polar media having lower boiling points are used, naturally-occurring pressure becomes high, and therefore, the boiling point of non-polar media to be used is preferably at least room temperature, more preferably at least 50°C, most preferably at least 80°C from the viewpoint of safety and convenience. On the other hand, the upper limit value for the boiling point of the non-polar media is not particularly limited, but when to be used for coating, the upper limit value is preferably 230°C, from the viewpoint of e.g. drying efficiency.

Non-polar media to be used in the present invention are not particularly limited so long as they are media which satisfy the above conditions. Specifically, they may, for example, be a $C_{1-20}$ aliphatic hydrocarbon which may have a halogen atom and/or an etheric oxygen atom; and a $C_{6-20}$ aromatic hydrocarbon which may have a halogen atom.

In such a non-polar medium, its molecular structure is not particularly limited. For example, the carbon skeleton may be linear, branched or cyclic, and it may have an etheric oxygen atom between carbon-carbon atoms constituting the main chain or a side chain, and some of hydrogen atoms bonded to carbon atoms may be substituted by halogen atoms such as fluorine atoms.

Specific examples of the $C_{1-20}$ aliphatic hydrocarbon which may have a halogen atom and/or an etheric oxygen atom, include an aliphatic hydrocarbon such as a chain hydrocarbon or a cyclic hydrocarbon; an aliphatic hydrofluorocarbon such as a chain hydrofluorocarbon or a cyclic hydrofluorocarbon; an aliphatic hydrochlorocarbon such as a chain hydrochlorocarbon or a cyclic hydrochlorocarbon; an aliphatic hydrochlorofluorocarbon such as a chain hydrochlorofluorocarbon or a cyclic hydrochlorofluorocarbon; and an aliphatic hydrofluoroether such as a chain hydrofluoroether or a cyclic hydrofluoroether.

Among the above non-polar media, as specific examples of a $C_{6-20}$ aromatic hydrocarbon which may have a halogen atom, an aromatic hydrocarbon, an aromatic hydrochlorocarbon, etc. are preferably mentioned.

These non-polar media may be used alone or in combination as a mixture of two or more of them.

Now, among the above mentioned compounds as non-polar media to be preferably used in the present invention, more preferred specific examples will be shown.

The chain hydrocarbon may, for example, be n-pentane, n-hexane, n-heptane, n-octane, 2,2,4-trimethylpentane, n-nonane, n-decane, n-undecane, n-dodecane, n-tridecane, n-tetradecane, etc.

The cyclic hydrocarbon may, for example, be cyclopentane, methylcyclopentane, cyclohexane, methylcyclohexane, 1,2-dimethylcyclohexane, 1,3-dimethylcyclohexane, 1,4-dimethylcyclohexane, 1,3,5-trimethylcyclohexane, 1,2,4-trimethylcyclohexane, ethylcyclohexane, n-propylcyclohexane, isopropylcyclohexane, n-butylcyclohexane, isobutylcyclohexane, t-butylcyclohexane, n-pentylcyclohexane, n-hexylcyclohexane, cycloheptane, cyclooctane, cis-decahydronaphthalene, trans-decahydronaphthalene, etc.

The chain hydrochlorocarbon may, for example, be 1-chloroheptane, 1-chlorooctane, 1-chlorononane, 1-chlorodecane, etc.

The cyclic hydrochlorocarbon may, for example, be chlorocyclopentane, chlorocyclohexane, etc.

The chain hydrofluorocarbon may, for example, be HFC-338pcc (1H, 4H-perfluorobutane), HFC-365mfc (1,1,1,3,3-pentafluorobutane), HFC-43-10mee (1,1,1,2,2,3,4,5,5,5-decafluoropentane), 1H-perfluorohexane, HFC-76-12sf (1,1,1,2,2,3,3,4,4,5,5,6,6-tridecafluorooctane), etc.

The cyclic hydrofluorocarbon may, for example, be fluorocyclopentane, fluorocyclohexane, etc.

The chain hydrochlorofluorocarbon may, for example, be HCFC-225ca (3,3-dichloro-1,1,1,2,2-pentafluoropropane), HCFC-225cb (1,3-dichloro-1,1,2,2,3-pentafluoropropane), etc.

The chain hydrofluoroether may, for example, be 1,1,2,2-tetrafluoroethyl ethyl ether, HFE-347 pcf2 (1,1,2,2-tetrafluoroethyl 2,2,2-trifluoroethyl ether), 1,1,2,3,3,3-hexafluoropropyl methyl ether, 1,1,1,3,3,3-hexafluoro-2-methoxypropane, HFE-449s1 (perfluorobutyl methyl ether), HFE-569sf2 (perfluorobutyl ethyl ether), 1,1,2,3,3,3-hexafluoropropyl ethyl ether, 1,1,2,2-tetrafluoroethyl 1,1,2,2-tetrafluoropropyl ether, 2,2,3,3,3-pentafluoroproply 1,1,2,2-tetrafluoroethyl ether, 1,1,3,3,3-pentafluoro-2-(trifluoromethyl)propyl methyl ether, 4-(difluoromethoxy)-1,1,1,2,3,3-hexafluorobutane, HFE-7300 (1,1,1,2,2,3,4,5,5,5-decafluoro-3-methoxy-4-(trifluoromethyl)pentane), etc.

The aromatic hydrocarbon may, for example, be benzene, toluene, o-xylene, m-xylene, p-xylene, ethylbenzene, 1,2,4-trimethylbenzene, 1,3,5-trimethylbenzene, tetralin, 1-methylnaphthalene, etc.

The aromatic hydrochlorocarbon may, for example, be chlorobenzene, 1-chloronaphthalene, etc.

Among these non-polar media, the following compounds may be exemplified as more preferred compounds as the non-polar media in the composition of the present invention.

The chain hydrocarbon may, for example, be n-hexane, n-heptane, n-octane, n-nonane, n-decane, n-undecane, n-dodecane, etc.

The cyclic hydrocarbon may, for example, be cyclohexane, methylcyclohexane, 1,2-dimethylcyclohexane, 1,3-dimethylcyclohexane, 1,4-dimethylcyclohexane, 1,3,5-trimethylcyclohexane, 1,2,4-trimethylcyclohexane, ethylcyclohexane, n-propylcyclohexane, isopropylcyclohexane, n-butylcyclohexane, isobutylcyclohexane, t-butylcyclohexane, n-pentylcyclohexane, n-hexylcyclohexane, cycloheptane, cyclooctane, cis-decahydronaphthalene, trans-decahydronaphthalene, etc.

The chain hydrofluorocarbon may, for example, be HFC-43-10mee, 1H-perfluorohexane, HFC-76-13sf, etc.

The chain hydrochlorofluorocarbon may, for example, be HCFC-225ca, HCFC-225cb, etc.

The chain hydrofluoroether may, for example, be HFE-347pcf2, HFE-449s1, HFE-569sf2, 1,1,2,3,3,3-hexafluoropropyl ethyl ether, 1,1,2,2-tetrafluoroethyl 1,1,2,2-tetrafluoropropyl ether, 2,2,3,3,3-pentafluoropropyl 1,1,2,2-tetrafluoroethyl ether, 1,1,3,3,3-pentafluoro-2-(trifluoromethyl)propyl methyl ether, 4-(difluoromethoxy)-1,1,1,2,3,3-hexafluorobutane, HFE-7300, etc.

The aromatic hydrocarbon may, for example, be toluene, o-xylene, m-xylene, p-xylene, ethylbenzene, 1,2,4-trimethylbenzene, 1,3,5-trimethylbenzene, tetralin, etc.

The aromatic hydrochlorocarbon may, for example, be chlorobenzene, etc.

Further, as the non-polar media in the composition of the present invention, more preferred compounds may, for example, be n-heptane, n-octane, n-decane, cyclohexane, methylcyclohexane, 1,2-dimethylcyclohexane, HFC-43-10mee, 1H-perfluorohexane, HFC-76-13sf, HCFC-225ca, HCFC-225cb, HFE-347pcf2, HFE-449s1, HFE-7300, toluene, o-xylene, tetralin, chlorobenzene, etc.

(Polar media)

Among components capable of constituting the medium mixture, polar media will be described below.

The polar media in the present invention are media, each of which does not by itself dissolve the fluorinated copolymer in a concentration of at least 1 mass% at a temperature of not higher than the melting point of the fluorinated copolymer, and media, of which the index (S) based on Hansen solubility parameters and represented by the above formula (2) is at least 6.

In the composition of the present invention, such a polar medium does not by itself dissolve the fluorinated copolymer in a concentration of at least 1 mass% at a temperature of not higher than the melting point of the fluorinated copolymer. However, by mixing, to this polar medium, the above non-polar medium and/or another polar medium, the mixture may have such a proper polarity that the dissolution index (R) represented by the above formula (1) is less than 25 and may dissolve the fluorinated copolymer at a temperature of not higher than the melting point of the fluorinated copolymer to form the fluorinated copolymer composition.

Such a polar medium is preferably liquid at room temperature, since if it is liquid at a temperature for dissolving the fluorinated copolymer in a medium mixture obtainable by such a polar medium, it can be used without any practical problem. The melting point of the polar medium is preferably at most 230°C.

If the melting point of such a polar medium exceeds 230°C, even if a mixture of the fluorinated copolymer and the above medium mixture is heated, it can hardly be made into a solution at the dissolution temperature. The melting point of the polar medium is preferably at most 50°C, more preferably at most 20°C. If the melting point is in such a range, the handling efficiency will be excellent at the time of dissolving the fluorinated copolymer.

The boiling point of such a polar medium is preferably the same or higher than the temperature in the step of dissolving the fluorinated copolymer in the polar medium. However, in the present invention, in a case where dissolution of the fluorinated copolymer is carried out under naturally-occurring pressure, it is possible to employ non-polar media and/or polar media, whereby the boiling point of a medium mixture composed of at least two members selected from non-polar media and/or polar media is not higher than the temperature in the dissolving step.

On the other hand, the upper limit value for the boiling point of the polar medium is not particularly limited, but when to be used for coating, the upper limit value is preferably 230°C from the viewpoint of e.g. drying efficiency.

Polar media to be used in the present invention are not particularly limited so long as they are media which satisfy the above conditions. Specifically, they may, for example, be a $C_{1-20}$ aliphatic hydrocarbon which contains at least one polar group selected from the group consisting of a hydroxy group, a carboxy group, a cyclic ester, a cyclic carbonate, a cyano group, a nitro group, an amide group, an amino group, a urea group, a sulfide group, a sulfoxide group, a sulfone group, a sulfonic acid group, a sulfonic acid ester group and a phosphoric acid ester group and which may have a halogen atom and/or an etheric oxygen atom; and a $C_{4-20}$ aromatic hydrocarbon which contains at least one polar group selected from the group consisting of a hydroxy group, a carboxy group, an ester group, a ketone group, an ether group, a cyano group, a nitro group, an amide group, an amino group, a sulfide group, a sulfoxide group, a sulfone group, a sulfonic acid group, and a sulfonic acid ester group and which may have a halogen atom.

In such a polar medium, its molecular structure is not particularly limited. For example, the carbon skeleton may be linear, branched or cyclic, and it may have an etheric oxygen atom between carbon-carbon atoms constituting the main chain or a side chain, and some of hydrogen atoms bonded to carbon atoms may be substituted by halogen atoms such as fluorine atoms. Here, the number of carbon atoms in such a polar medium is meant for the number of carbon atoms of the entire compound including the number of carbon atoms contained in the polar group.

Among such polar media, specific examples of the $C_{1-20}$ aliphatic hydrocarbon which contains at least one polar group selected from the group consisting of a hydroxy group, a carboxy group, a cyclic ester, a cyclic carbonate, a cyano group, a nitro group, an amide group, an amino group, an urea group, a sulfide group, a sulfoxide group, a sulfone group, a sulfonic acid group, a sulfonic acid ester group and a phosphoric acid ester group and which may have a halogen atom and/or an etheric oxygen atom, include an aliphatic alcohol, an aliphatic fluorinated alcohol, an aliphatic carboxylic acid, an aliphatic lactone, an alicyclic carbonate, an aliphatic nitrile, a nitroalkane, an aliphatic amide, an aliphatic amine, an aliphatic urea compound, an aliphatic sulfide, an aliphatic sulfoxide, an aliphatic sulfone, an aliphatic sulfonic acid, an aliphatic sulfonic acid ester, an aliphatic sultone, an aliphatic phosphoric acid ester, etc.

Among the above polar media, specific examples of the $C_{4-20}$ aromatic hydrocarbon which contains at least one polar group selected from the group consisting of a hydroxy group, a carboxy group, an ester group, a ketone group, an ether group, a cyano group, a nitro group, an amide group, an amino group, a sulfide group, a sulfoxide group, a sulfone group, a sulfonic acid group and a sulfonic acid ester group and which may have a halogen atom, include a phenol, an aromatic carboxylic acid, an aromatic ester, an aromatic ketone, an aromatic ether, an aromatic nitrile, an aromatic nitro compound, an aromatic amide, an aromatic amine, an aromatic sulfide, an aromatic sulfoxide, an aromatic sulfone, an aromatic sulfonic acid, an aromatic sulfonic acid ester, etc.

They may be used alone, or two or more of them may be used in combination.

Now, among the above compounds to be preferably used as the polar media in the present invention, more preferred specific examples will be shown.

The aliphatic alcohol may, for example, be methanol, ethanol, 1-propanol, 2-propanol, 1-butanol, isobutyl alcohol, 2-butano, t-butyl alcohol, 1-pentanol, isoamyl alcohol, 2-methyl-1-butanol, 2-pentanol, 3-methyl-2-butanol, 2-methyl-2-butanol, 2,2-dimethyl-1-propanol, 1-hexanol, 2-hexanol, 2-ethyl-1-butanol, 1-heptanol, 2-heptanol, 3-heptanol, 4-heptanol, 2,4-dimethyl-3-pentanol, 1-octanol, 2-octanol, 2-ethyl-1-hexanol, 1-nonanol, 1-decanol, 1-undecanol, 1-dodecanol, ethylene glycol, propylene glycol, 1,3-propanediol, 1,4-butanediol, 1,5-pentanediol, 1,6-hexanediol, 1,8-octanediol, ethylene glycol monomethyl ether, ethylene glycol monoethyl ether, ethylene glycol mono-n-butyl ether, ethylene glycol mono-n-hexyl ether, propylene glycol monomethyl ether, propylene glycol monoethyl ether, propylene glycol mono-n-butyl ether, diethylene glycol monomethyl ether, diethylene glycol monoethyl ether, etc.

The aliphatic fluorinated alcohol may, for example, be 2,2,2-trifluoroethanol, 2,2,3,3-tetrafluoro-1-propanol (TFPO), 2,2,3,3,3-pentafluoro-1-propanol, 1,1,1,3,3,3-hexafluoro-2-propanol, 2,2,3,3,4,4,4-heptafluoro-1-butanol, 2,2,3,4, 4,4-hexafluoro-1-butanol, 2,2,3,3,4,4,5,5-octafluoro-1-pentanol, 2,2-bis(trifluoromethyl)-1-propanol, 3,3,4,4,5,5,6,6,6-nonafluoro-1-hexanol, 2,3,3,3-tetrafluoro-2-(perfluoropropyloxy)-1-propanol, 4,4,5,5,6,6,7,7,7-nonafluoro-1-heptanol, 7,7,8,8,8-pentafluoro-1-octanol, 7,8,8,8-tetrafluoro-7-(trifluoromethyl)-1-octanol, etc.

The aliphatic carboxylic acid may, for example, be formic acid, acetic acid, propionic acid, butyric acid, isobutyric acid, valeric acid, isovaleric acid, hexanoic acid, heptanoic acid, n-octanoic acid, chloroacetic acid, trichloroacetic acid, trifluoroacetic acid, lactic acid, etc.

The aliphatic lactone may, for example, be β-propiolactone, γ-butyrolactone, ε-caprolactone, etc.

The cyclic carbonate may, for example, be ethylene carbonate, propylene carbonate, etc.

The aliphatic nitrile may, for example, be acetonitrile, propionitrile, etc.

The nitroalkane may, for example, be nitromethane, nitroethane, 1-nitropropane, 2-nitropropane, etc.

The aliphatic amide may, for example, be formamide, N-methylformamide, acetamide, N,N-dimethylformamide, N-ethylformamide, N-methylacetamide, propionamide, N,N-dimethylacetamide, N-ethylacetamide, N-methylpropionamide, butylamide, N,N-dimethylpropionamide, N,N-diethylformamide, N-ethylpropionamide, N-methylbutylamide, N-n-butylformamide, N-isobutylformamide, N-sec-butylamide, N-t-butylamide, N,N-dimethylbutylamide, N,N-diethylacetamide, hexanamide, N,N-dibutylformamide, 2-pyrrolidone, 1-methyl-2-pyrrolidone, 1-ethyl-2-pyrrolidone, 1-n-butyl-2-pyrrolidone, etc.

The aliphatic amine may, for example, be ethylamine, n-propylamine, isopropylamine, n-butylamine, isobutylamine, t-butylamine, n-pentylamine, n-hexylamine, cyclohexylamine, n-heptylamine, n-octylamine, 2-ethylhexylamine, n-nonylamine, n-undecylamine, pyrrolidine, N-methylpyrrolidine, piperidine, N-methylpiperidine, morpholine, N-methylmorpholine, N-ethylmorpholine, etc.

The aliphatic urea compound may, for example, be tetramethylurea, 1,3-dimethyl-2-imidazolidinone, etc.

The aliphatic sulfide may, for example, be tetramethylene sulfide, pentamethylene sulfide, etc.

The aliphatic sulfoxide may, for example, be dimethyl sulfoxide, diethyl sulfoxide, di-n-propyl sulfoxide, diisopropyl sulfoxide, di-n-butyl sulfoxide, diisobutyl sulfoxide, tetramethylene sulfoxide, etc.

The aliphatic sulfone may, for example, be dimethyl sulfone, sulfolane, etc.

The aliphatic sulfonic acid may, for example, be methanesulfonic acid, etc.

The aliphatic sulfonic acid ester may, for example, be methyl methanesulfonate, etc.

The aliphatic sultone may, for example, be 1,3-propanesultone, 1,4-butanesultone, etc.

The aliphatic phosphoric acid ester may, for example, be trimethyl phosphate, triethyl phosphate, etc.

The phenol may, for example, be phenol, o-cresol, m-cresol, p-cresol, 2,3-dimethylphenol, 2,4-dimethylphenol, 2,5-dimethylphenol, 2,6-dimethylphenol, 3,4-dimethylphenol, 3,5-dimethylphenol, 2-ethylphenol, 3-ethylphenol, 4-ethylphenol, 2,3,5-trimethylphenol, 2,3,6-trimethylphenol, 2,4,6-trimethylphenol, etc.

The aromatic carboxylic acid may, for example, be benzoic acid, etc.

The aromatic ester may, for example, be methyl benzoate, ethyl benzoate, etc.

The aromatic ketone may, for example, be acetophenone, propiophenone, etc.

The above aromatic ether may, for example, be anisole, 2-methoxytoluene, 3-methoxytoluene, 4-methoxytoluene, etc.

The above aromatic nitrile may, for example, be benzonitrile, 2-methylbenzonitrile, 3-methylbenzonitrile, 4-methylbenzonitrile, 2-ethylbenzonitrile, 3-ethylbenzonitrile, 4-ethylbenzonitrile, 2-methoxybenzonitrile, 3-methoxybenzonitrile, 4-methoxybenzonitrile, etc.

The aromatic nitro compound may, for example, be nitrobenzene, etc.

The aromatic amine may, for example, be pyridine, 2-picoline, 3-picoline, 4-picoline, aniline, 2,3-lutidine, 2,4-lutidine, 2,5-lutidine, 2,6-lutidine, 3,4-lutidine, 3,5-lutidine, 2-ethylpyridine, 3-ethylpyridine, 4-ethylpyridine, o-toluidine, m-toluidine, p-toluidine, benzylamine, etc.

The above aromatic amide may, for example, be N,N-dimethylbenzoic acid amide, etc.

The aromatic sulfide may, for example, be thiophene, methylphenyl sulfide, etc.

The aromatic sulfoxide may, for example, be methylphenyl sulfoxide, etc.

The aromatic sulfone may, for example, be methylphenyl sulfone, etc.

The aromatic sulfonic acid may, for example, be benzenesulfonic acid, etc.

The aromatic sulfonic acid ester may, for example, be methyl benzenesulfonate, etc.

Among these polar media, the following compounds may be exemplified as more preferred compounds as the polar media in the composition of the present invention.

The aliphatic alcohol may, for example, be methanol, ethanol, 1-propanol, 2-propanol, 1-butanol, 2-butanol, 1-pentanol, isoamyl alcohol, 1-hexanol, 1-heptanol, 1-octanol, 2-ethyl-1-hexanol, 1-nonanol, ethylene glycol monomethyl ether, ethylene glycol monoethyl ether, ethylene glycol mono-n-butyl ether, ethylene glycol mono-n-hexyl ether, propylene glycol monomethyl ether, propylene glycol monoethyl ether, propylene glycol mono-n-butyl ether, diethylene glycol monomethyl ether, ethylene glycol, etc.

The aliphatic fluorinated alcohol may, for example, be 2,2,3,3-tetrafluoro-1-propanol, 1,1,1,3,3,3-hexafluoro-2-propanol, 2,2,3,3,4,4,4-heptafluoro-1-butanol, 3,3,4,4,5,5,6,6,6-nonafluoro-1-hexanol, etc.

The aliphatic carboxylic acid may, for example, acetic acid, propionic acid, butyric acid, isobutyric acid, valeric acid, isovaleric acid, etc.

The aliphatic lactone may, for example, be β-propiolactone, γ-butyrolactone, ε-caprolactone, etc.

The cyclic carbonate may, for example, be ethylene carbonate, propylene carbonate, etc.

The aliphatic nitrile may, for example, be acetonitrile, propionitrile, etc.

The aliphatic amide may, for example, be N,N-dimethylformamide, N,N-dimethylacetamide, 1-methyl-2-pyrrolidone, etc.

The aliphatic amine may, for example, be cyclohexylamine, etc.

The aliphatic urea compound may, for example, be 1,3-dimethyl-2-imidazolidinone, etc.

The aliphatic sulfoxide may, for example, be dimethyl sulfoxide, etc.

The aliphatic sulfone may, for example, be dimethyl sulfone, sulfolane, etc.

The aromatic ester may, for example, be methyl benzoate, etc.

The aromatic ketone may, for example, be acetophenone, etc.

The aromatic ether may, for example, be anisole, etc.

The aromatic nitrile may, for example, be benzonitrile, 2-methylbenzonitrile, 3-methylbenzonitrile, 4-methylbenzonitrile, etc.

Further, as the above polar media in the composition of the present invention, further preferred compounds may, for example be methanol, 1-propanol, isoamyl alcohol, propylene glycol monomethyl ether, ethylene glycol, 2,2,3,3-tetrafluoro-1-propanol, 2,2,3,3,4,4,4-heptafluoro-1-butanol, 3,3,4,4,5,5,6,6,6-nonafluoro-1-hexanol, acetic acid, γ-butyrolactone, propylene carbonate, acetonitrile, propionitrile, N,N-dimethylformamide, N,N-dimethylacetamide, 1-methyl-2-pyrrolidone, cyclohexylamine, 1,3-dimethyl-2-imidazolidinone, dimethyl sulfoxide, sulfolane, methyl benzoate, acetophenone, anisole, benzonitrile, etc.

<3> Fluorinated copolymer composition

The fluorinated copolymer composition of the present invention comprises the fluorinated copolymer containing repeating units derived from ethylene and repeating units derived from tetrafluoroethylene and the medium mixture composed of at least two members selected from media, each of which does not by itself dissolve the fluorinated copolymer in a concentration of at least 1 mass% at a temperature of not higher than the melting point of the fluorinated copolymer and of which the dissolution index (R) for the fluorinated copolymer, based on Hansen solubility parameters and represented by the above formula (1), is less than 25.

In the fluorinated copolymer composition of the present invention, the above medium mixture has a function as a solvent to dissolve the fluorinated copolymer. Here, "dissolution" of the fluorinated copolymer by the medium mixture includes at least dissolution at a temperature of not higher than the melting point of the fluorinated copolymer to be dissolved. That is, the fluorinated copolymer composition of the present invention has a temperature range in which the composition exhibits a solution state at least at a temperature not higher than the melting point of the fluorinated copolymer. In other words, the fluorinated copolymer composition of the present invention may maintain a solution state in a certain temperature region at a temperature of not higher than the melting point of the fluorinated copolymer and may not necessarily be in a solution state at ordinary temperature.

Here, the dissolution temperature being the lower limit temperature in a temperature range where the fluorinated copolymer composition of the present invention exhibits a solution state, is preferably at most 230°C, more preferably at most 200°C. If the dissolution temperature of the fluorinated copolymer composition exceed 230°C, there may be a problem which cannot be easily solved in carrying out the practical operation.

Further, in the temperature range where the fluorinated copolymer composition of the present invention exhibits a solution state, the vapor pressure of the solution is preferably at least within a range of not higher than the naturally-occurring pressure, more preferably within a range of not higher than 3 MPa, further preferably within a range of not higher than 2 MPa, particularly preferably within a range of not higher than 1 MPa. When the vapor pressure of the solution where the fluorinated copolymer composition of the present invention is in a solution state, is within such a range, it is practically possible to carry out the operation easily.

Further, in the composition of the present invention, as the solvent to dissolve the fluorinated copolymer, the medium mixture, of which the dissolution index (R) is less than 25, is employed. It is preferred to employ a medium mixture composed of a combination of at least two members selected from the above non-polar media and/or the above polar media.

Further, the composition of the present invention may further contain an organic medium (hereinafter referred to as a "dissolvable medium") capable of dissolving the fluorinated copolymer by itself at a temperature of not higher than the melting point of the fluorinated copolymer, e.g. at least one member selected from ketones having carbonyl groups, esters, etc., as an optional component, in addition to the medium mixture as the essential component, within a range not to impair the functions as the solvent to dissolve the fluorinated copolymer.

In the fluorinated copolymer composition of the present invention, the content of the medium mixture or a mixed solvent of the medium mixture and the dissolvable medium as an optional component, is not particularly limited. Such a content is from 20 to 99.9 mass%, preferably from 40 to 99.5 mass%, based on the total amount of the composition, from the viewpoint of the moldability at the time of obtaining a molded product.

For example, in a case where a thin film of the fluorinated copolymer is obtained by using the fluorinated copolymer composition of the present invention, the content of the medium mixture in the composition is preferably from 70 to 99.9 mass%, more preferably from 90 to 99.5 mass%, most preferably from 95 to 99 mass%, based on the total amount of the composition. When the content is within such a range, the handling efficiency will be excellent at the time of coating in the preparation of a thin film, and it is possible to obtain a homogeneous thin film made of the fluorinated copolymer. Further, in a case where a fluorinated copolymer porous body is obtained without using a supporting member at the time of molding e.g. a tube made of the fluorinated copolymer by using the fluorinated copolymer composition of the present invention, the content of the medium mixture in the composition is preferably from 20 to 95 mass%, more preferably from 40 to 90 mass%, based on the total amount of the composition. When the content is within such a range, the moldability into a film or a hollow fiber will be excellent, and it is possible to obtain a fluorinated copolymer porous body having a narrow pore size distribution and a high strength. Also in a case where the composition contains a mixed solvent containing a dissolvable medium being an optional component, the content of the mixed solvent is in the same range as described above.

The fluorinated copolymer composition of the present invention contains the above-described medium mixture as an essential component and contains the above dissolvable medium as an optional component, however, as the case requires, it may further contain other components within a range not to impair the effects of the present invention.

As such other components, various additives may be mentioned including, for example, an antioxidant, an ultraviolet stabilizer, a crosslinking agent, a lubricant, a plasticizer, a thickening agent, a bulking agent (filler), a reinforcing agent, a pigment, a dye, a flame retardant, an antistatic agent, etc. Here, the content of such optional components to be incorporated within a range not to impair the effect of the present invention is at most 30 mass%, preferably at most 25 mass%, based on the total amount of the composition.

[Process for producing fluorinated copolymer composition]

Now, a process for producing a fluorinated copolymer composition of the present invention by using the above mentioned various components to be incorporated in the fluorinated copolymer composition of the present invention will be described.

The process for producing the fluorinated copolymer composition of the present invention has a step of dissolving the fluorinated copolymer containing repeating units derived from ethylene and repeating units derived from tetrafluoroethylene, in the medium mixture at a temperature of not higher than the melting point of the fluorinated copolymer. The temperature for dissolving the fluorinated copolymer in the medium mixture is more preferably a temperature lower by at least 30°C than the melting point of the fluorinated copolymer to be used.

Further, in a case where the fluorinated copolymer composition contains the above mentioned dissolvable medium in addition to the medium mixture, the dissolution step is carried out by dissolving the fluorinated copolymer in the mixed solvent of such media at a temperature of not higher than the melting point of the fluorinated copolymer.

The melting point of the fluorinated copolymer in the present invention is about 275°C even at the highest, and accordingly, the temperature in the step of dissolving it in the medium mixture or mixed solvents (hereinafter they may be generally referred to as the "solvent such as the medium mixture") is preferably a temperature of at most 245∘C which is lower by 30°C than 275°C. The temperature for dissolving the fluorinated copolymer in the solvent such as the medium mixture is more preferably at most 230°C, particularly preferably at most 200°C. Further, the lower limit of the temperature in the dissolving step is preferably 0°C, more preferably 20°C. If the temperature in the dissolving step is lower than 0°C, no adequate dissolution state may be obtainable, and if it is a temperature exceeding 245°C, there may be a problem which cannot easily be solved in carrying out the practical operation.

In the dissolution step, conditions other than the temperature are not particularly limited, and it is usually preferred to carry out the dissolution under ordinary pressure. For example, in a case where depending upon the type of the fluorinated copolymer or the solvent such as the medium mixture, the boiling point is lower than the temperature in the dissolution step, a method of carrying out the dissolution in a pressure resistant container at least under a condition of not higher than naturally-occurring pressure, preferably not higher than 3 MPa, more preferably not higher than 2 MPa, further preferably not higher than 1 MPa, more preferably not higher than ordinary pressure, may be mentioned. Usually, it is possible to carry out the dissolution under a condition of from about 0.01 to 1 MPa.

The dissolution time depends on e.g. the content of the fluorinated copolymer in the composition of the present invention or the shape of the fluorinated copolymer. From the viewpoint of the operation efficiency, the dissolution time is preferably from 5 minutes to 24 hours, more preferably from 10 minutes to 8 hours, most preferably from 10 minutes to 5 hours. The shape of the fluorinated copolymer to be used is preferably a powder form from the viewpoint of the operation efficiency to shorten the dissolution time. However, in view of availability, etc. it is also possible to employ one having another shape such as a pellet form.

In the above dissolving step, the dissolving means is not particularly limited, and a common method may be employed. For example, necessary amounts of the respective components to be incorporated to the composition may be weighed, and such components may be uniformly mixed at a temperature of not higher than the melting point of the fluorinated copolymer to be used, preferably at a temperature of from 0 to 230°C, more preferably at a temperature of from 20 to 220°C, to dissolve the fluorinated copolymer in the solvent such as the medium mixture. From the viewpoint of the efficiency, it is preferred to carry out the above dissolution by means of a common stirring and mixing machine such as a homomixer, a Henschel mixer, a Banbury mixer, a pressure kneader or a single screw or twin screw extruder. In a case where the dissolution is carried out under an elevated pressure, an apparatus such as an autoclave equipped with a stirrer may be employed, and as the shape of stirring vanes, a marine propeller vane, a paddle vane, an anchor vane, a turbine vane or the like may be employed.

[Molded product using fluorinated copolymer composition]

Formation of a coating film of the fluorinated copolymer composition of the present invention is preferably carried out by a method such as applying the fluorinated copolymer composition of the present invention to a substrate, or dipping a substrate in the fluorinated copolymer composition. Then, by removing a solvent such a medium mixture from this coating film, a thin film of the fluorinated copolymer can be formed.

The method for forming a thin film of the fluorinated copolymer using the fluorinated copolymer composition of the present invention, may, for example, be a method of applying the fluorinated copolymer composition to a substrate at a temperature of at least the dissolving temperature of the fluorinated copolymer in the composition, followed by drying at the temperature of at least the dissolving temperature (removal of the medium mixture), a method of applying the fluorinated copolymer composition to a substrate at a temperature of not higher than the dissolving temperature of the fluorinated copolymer in the composition, followed by heating and drying at a temperature of at least the dissolving temperature of the fluorinated copolymer, or a method of heating the fluorinated copolymer composition to dissolve the fluorinated copolymer, then applying this composition at a temperature of not higher than the dissolving temperature, and further drying it at a temperature of not higher than the dissolving temperature of the fluorinated copolymer.

The method for applying the fluorinated copolymer composition is not particularly limited, and it is possible to employ a common method. Such a coating method may, for example, be a method such as gravure coating, dip coating, die coating, electrostatic coating, brush coating, screen printing, roll coating or spin coating.

One embodiment of the method for forming a thin film of the fluorinated copolymer using the fluorinated copolymer composition of the present invention may be a method comprising a step of applying the fluorinated copolymer composition to a substrate at a temperature of at least the dissolving temperature of the fluorinated copolymer in the composition. Specifically, it is a method comprising a step of applying the fluorinated copolymer composition characterized by dissolving the fluorinated copolymer, followed by applying it to the substrate while maintaining the dissolved state. After applying the fluorinated copolymer composition to the substrate by using such an application step, a solvent such as a medium mixture is removed by e.g. heating and drying, whereby it is possible to obtain a dense and flat thin film of the fluorinated copolymer on the substrate. A preferred temperature of the composition in the step of applying the fluorinated copolymer composition varies depending upon the medium mixture contained in the fluorinated copolymer composition, but it is preferably from 50 to 250°C, more preferably from 80 to 200°C. If the temperature is lower than the 50°C, the fluorinated copolymer may not sufficiently be dissolved, and if it exceeds 250°C, the solvent such as the medium mixture contained is likely to evaporate, such being undesirable.

Another embodiment of the method for forming a thin film of the fluorinated copolymer using the fluorinated copolymer composition of the present invention may be a method comprising a step of applying the fluorinated copolymer composition to a substrate at a temperature of not higher than the dissolving temperature of the fluorinated copolymer in the composition, followed by heating at a temperature of at least the dissolving temperature of the fluorinated copolymer. In this method, after the heating step, the solvent such as the medium mixture is removed by e.g. further heating and drying, whereby it is possible to form a thin film of the fluorinated copolymer on the substrate. In this method, the temperature of the composition in the step of applying the fluorinated copolymer composition to the substrate, may be low, whereby restrictions on the apparatus are less, and the operation efficiency will be excellent.

The fluorinated copolymer composition to be used in this method may be a composition in such a state that a powder form fluorinated copolymer is dispersed in a solvent such as a medium mixture, or a composition in such a state that the fluorinated copolymer is dissolved in a solvent such as a medium mixture, followed by cooling to improve the dispersibility. It is preferred to employ the composition in such a state that it was once dissolved and then cooled.

The temperature of the composition at the time of applying the fluorinated copolymer composition to the substrate is not particularly limited. From the viewpoint of the operation efficiency, it is preferably from 0 to 150°C, more preferably from 50 to 80°C. The temperature for heating after the application is preferably from 50 to 350°C, more preferably from 80 to 250°C. By heating within this temperature range, the fluorinated copolymer in the coating film of the fluorinated copolymer composition is dissolved and homogenized, and by removing the solvent such as the medium mixture by e.g. further heating and drying, it is possible to obtain a dense and flat thin film of the fluorinated copolymer on the substrate.

Further, still another embodiment of the method for forming a thin film of the fluorinated copolymer using the fluorinated copolymer composition of the present invention may be a method which comprises dissolving the fluorinated copolymer in the fluorinated copolymer composition in a solvent such as a medium mixture, then applying this composition to a substrate at a temperature of not higher than the dissolving temperature, and further drying the coating film of this composition on the substrate at a temperature of not higher than the dissolving temperature of the fluorinated copolymer to remove the solvent such as the medium mixture.

According to this method, no step is involved wherein a high temperature load is exerted to the substrate, and therefore, it becomes easy to form a thin film of the fluorinated copolymer on a material having a low heat resistance, such as a plastic, paper, cloth or the like, which has been heretofore difficult. In a case where such a material having a low heat resistance is used as the substrate, the temperature of the composition at the time of applying the fluorinated copolymer composition to the substrate is preferably set within a temperature range not exceeding the decomposition or deformation temperature of the substrate, and it is preferably set to be a temperature of from 0 to 150°C, further preferably a temperature of from 5 to 120°C, although it may vary depending upon the substrate. The temperature for drying after the application is preferably from 5 to 150°C, further preferably from 5 to 120°C. By carrying out application and drying within such temperature ranges, it becomes possible to form a thin film of the fluorinated copolymer having a uniform thickness on the substrate without bringing about decomposition or deformation of the substrate, even if the substrate is constituted by a material having a low heat resistance.

As described above, the fluorinated copolymer composition of the present invention is a composition suitable for forming a thin film of the fluorinated copolymer on various substrates. The material or shape of the substrate on which a thin film of the fluorinated copolymer may be formed, is not particularly limited. Specifically, substrates of various materials such as metal, glass, silicon, plastic, stone material, wood, porcelain, cloth, paper, etc. may be mentioned. A thin film of the fluorinated copolymer formed on such a substrate may be used together with the substrate as a thin film-covered substrate, or as separated from the substrate in the form of a single thin film, depending upon the particular purpose.

In a case where a thin film of the fluorinated copolymer is formed on a substrate by using the fluorinated copolymer composition of the present invention and is used as a thin film-covered substrate, pretreatment may be applied to the substrate for the purpose of improving the adhesion of the thin film to the substrate. For example, the substrate may be coated with e.g. a silane coupling agent or polyethyleneimine, the surface of the substrate may physically be treated by e.g. sand blasting, or the substrate surface may be treated by e.g. corona discharge treatment.

Otherwise, the thin film of the fluorinated copolymer formed on the substrate may be separated from the substrate and then used as a film-shaped product (hereinafter sometimes referred to simply as a "film"). In the case of using it as a film separated from the substrate, a substrate made of a material with good releasability may be used, or pretreatment may be applied to the substrate with e.g. a release agent.

When a film of the fluorinated copolymer is formed by using the fluorinated copolymer composition of the present invention, it is possible to produce a thin and uniform film as compared with a film obtainable by common melt-forming.

The film thickness of the thin film or film-shaped product of the fluorinated copolymer formed on the substrate may freely be selected depending upon the particular purpose. When a solution or dispersion having a high concentration of the contained fluorinated copolymer is used as the fluorinated copolymer composition, a thin film having a large thickness can be obtained, and when a solution or dispersion having a low concentration is used, a thin film having a small thickness can be obtained. Further, by repeating the coating step a plurality of times, it is also possible to obtain a thin film having a larger thickness. The film thickness of the thin film thus obtainable is preferably from 0.01 μm to 1000.0 μm, more preferably from 0.1 μm to 100.0 μm, most preferably from 0.5 μm to 50.0 μm.

Further, it is also possible that the fluorinated copolymer in the fluorinated copolymer composition of the present invention is desired to have crosslinkability, so that after applying the composition to a substrate and removing a solvent such as a medium mixture, the fluorinated copolymer is crosslinked and cured to form a thin film made of a cured product of the fluorinated copolymer. As the crosslinking method, a commonly-employed method may, for example, be used, as the case requires.

For example, a method may be mentioned wherein as the fluorinated copolymer to be incorporated to the fluorinated copolymer composition, one containing polymerized units derived from a monomer having a crosslinkable moiety in addition to repeating units derived from ethylene and repeating units derived from tetrafluoroethylene, is used, and a crosslinking agent which reacts with the above crosslinkable moiety in the composition, is further added, whereby a coating film is formed, and after removing a solvent such as a medium mixture, the crosslinking/curing reaction is carried out. Otherwise, it is also possible that as the fluorinated copolymer, a fluorinated copolymer having crosslinkable moieties which undergo a crosslinking reaction by e.g. light or radiation, is used to prepare the fluorinated copolymer composition, whereby a coating film is formed, and after removing a solvent such as a medium mixture, crosslinked and cured by irradiating it with e.g. light or radiation, to form a thin film made of a cured product of the fluorinated copolymer.

In consideration of the characteristics such as moldability, the fluorinated copolymer composition of the present invention is applicable to various uses including, for example, protective coating agents and water repellent coating agents in the optical and electrical fields, for optical fiber clad materials, lenses, mirrors, solar cells, optical disks, touch panels, semiconductor elements, hybrid IC, liquid crystal cells, printed circuit boards, photosensitive drums, film condensers, glass windows, various films, etc.; protective, weather resistant or antifouling coating agents for e.g. articles in the medical and chemical fields such as syringes, pipettes, thermometers, beakers, Petri dishes, measuring cylinders, etc., other solder masks, solder resists, rubbers, plastics, etc.; protective coating agents for fibers and cloths; antifouling agents for sealants; IC sealing agents; corrosion-preventive coating materials; resin-attachment preventive agents; ink-attachment preventive agents; etc.

Further, the fluorinated copolymer composition of the present invention can be used advantageously as a material to prepare an interlayer dielectric film or a protective film in a semiconductor element or an integrated circuit device. When the fluorinated copolymer composition of the present invention is used for such an application, it is possible to obtain a semiconductor element integrated circuit device having a high response speed with little malfunction, utilizing the characteristics of the fluororesin such as the low water absorbing property, low dielectric constant and high heat resistance.

EXAMPLES

Now, Examples of the present invention will be described, but it should be understood that the present invention is by no means limited to such Examples.

(Dissolution procedure)

In the following Examples and Comparative Examples, dissolution was carried out by the following method unless otherwise specified.

In a 50 mL pressure resistant glass reactor, a fluorinated copolymer, a non-polar medium, a polar medium and a stirrer were put, and the relative ratio of the amount of the fluorinated copolymer to the total amount of the non-polar medium and the polar medium was adjusted so that the fluorinated copolymer became from 1 to 10 mass%. The reactor was heated in an oil bath or heat block which was closed, thoroughly stirred and temperature-controlled.

Heating was carried out while visually observing whether or not the fluorinated copolymer was dissolved. A temperature was recorded at which the content in the reactor became a transparent uniform solution and thus was observed to be completely dissolved. Then, the solution was gradually cooled, and a temperature was confirmed at which the solution became turbid, whereupon it was re-heated, whereby a temperature at which a transparent uniform solution was again obtained, was taken as the dissolution temperature.

[Example 1]

In a pressure resistant glass reactor, 0.20 g of ETFE (Fluon (registered trademark) LM-720AP manufactured by Asahi Glass Company, Limited, melting point: 225°C, melt index: 18.7 (297°C), hereinafter referred to as "ETFE1") as the fluorinated copolymer, 9.40 g of n-heptane (non-polar medium) and 9.50 g of N,N-dimethylformamide (polar medium) were put and heated to 160°C with stirring, to obtain a uniform transparent solution. The reactor was gradually cooled, whereby the solution became turbid at 140°C. The reactor was again heated, whereby the solution again became a uniform transparent solution at 150°C. 150°C was taken as the dissolution temperature at a concentration of 1 mass% of ETFE1. The obtained fluorinated copolymer composition is the composition of the present invention.

Further, in Table 1, the amounts of ETFE1, the non-polar medium (n-heptane) and the polar medium (N,N-dimethylformamide) used, as well as the Hansen solubility parameters ($\delta d$, $\delta p$ and $\delta h$) and the dissolution indices (R) calculated by the above formula (1), of the non-polar medium and the polar-medium, and further the medium mixture obtained by mixing them, are shown. Further, in the column for the Hansen solubility parameters, etc. of the medium mixture, the volume ratio of the non-polar medium to the polar medium is shown. Further, the concentration of the fluorinated copolymer (identified as "polymer concentration" in Table 1) and the results of measurement of the dissolution temperature are also shown in Table 1.

[Examples 2 to 34]

The dissolution tests were carried out and the fluorinated copolymer compositions were obtained in the same manner as in Example 1 except that the amount of ETFE1 used, and the types and amounts of the non-polar medium and polar medium used, were changed as shown in Tables 1 to 4 (in Table 1 with respect to Examples 2 to 10, in Table 2 with respect to Examples 11 to 20, in Table 3 with respect to Examples 21 to 30, and in Table 4 with respect to Examples 31 to 34). The Hansen solubility parameters and the dissolution indices (R) of the non-polar medium and polar medium used, and further the medium mixture prepared by mixing them, the concentration of the fluorinated copolymer, and the results of measurement of the dissolution temperature, are also shown in Tables 1 to 4.

Here, in a case where in Examples, two type of non-polar media and/or polar media were used, these media were designated as non-polar medium (1), non-polar medium (2), polar medium (3) and polar medium (4), and in Tables 1 to 4, in the column for non-polar media (1) (2), the type and numerical values of non-polar medium (1) are shown in the upper section and the type and numerical values of non-polar medium (2) are shown in the lower section, and in the column for polar media (3) (4), the type and numerical values of polar medium (3) are shown in the upper section and the type and numerical values of polar medium (4) are shown in the lower section. When one non-polar medium and one polar medium were used, they were designated as non-polar medium (1) and polar medium (3), respectively. Further, with respect to the volume ratio: (1)/(2)/(3)/(4) in Tables 1 to 4, in a case where any one of the non-polar media and polar media (1) to (4) was not used, with respect to such a medium, an identification was omitted instead of identifying it as "0". For example, as in Example 4, in a case where non-polar medium (1), polar medium (3) and polar medium (4) were used, the volume ratio was identified by (1)/(3)/(4).

[Comparative Example 1]

In a pressure resistant glass reactor, 0.20 g of ETFE1 as the fluorinated copolymer and 19.8 g of n-heptane as a non-polar medium were put and heated to 200°C with stirring, but did not dissolve at all, and a solution was not obtained.

[Comparative Example 2]

In a pressure resistant glass reactor, 0.20 g of ETFE1 as the fluorinated copolymer and 19.8 g of N,N-dimethylformamide as a polar medium were put and heated to 200°C with stirring, but did not dissolve at all, and a solution was not obtained.

[Comparative Example 3]

In a pressure resistant glass reactor, 0.20 g of ETFE1 as the fluorinated copolymer and 19.8 g of diisobutyl adipate were put and heated to 200°C with stirring, but only swelled, and a solution was not obtained.

[Example 35]

The dissolution test was carried out, and a fluorinated copolymer composition was obtained, in the same manner as in Example 1 except that the fluorinated copolymer used was changed to 2.80 g of ETFE (Fluon (registered trademark) Z-8820X manufactured by Asahi Glass Company, Limited, melting point: 260°C, melt index: 10 (297°C), hereinafter referred to as "ETFE2"), the non-polar medium was changed to 14.0 g of n-octane, and the polar medium was changed to 11.1 g of N,N-dimethylformamide. In Table 4, the amounts of ETFE2, the non-polar medium and the polar medium used, as well as the Hansen solubility parameters and dissolution indices (R) of the non-polar medium, the polar medium and the medium mixture prepared by mixing them, are shown. Further, the concentration of the fluorinated copolymer and the results of measurement of the dissolution temperature are also shown in Table 4.

[Example 36]

The dissolution test was carried out, and a fluorinated copolymer composition was obtained in the same manner as in Example 35 except that the amount of ETFE used, and the types and amounts of the non-polar medium and polar medium, were changed as shown in Table 4. The Hansen solubility parameters and dissolution indices (R) of the non-polar medium and polar medium used, and the medium mixture prepared by mixing them, the concentration of the fluorinated copolymer, and the results of measurement of the dissolution temperature, are also shown in Table 4.

TABLE 1

| | Fluorinated copolymer | | Hansen solubility parameters and dissolution indices (R) | | | | | | | | | | | | | | Polymer concentration (mass%) | Dissolution temp. (°C) |
| | | | Media constituting medium mixture | | | | | | | | | | Medium mixture | | | | | |
| | Type | (g) | Non-polar media (1)(2) | | | | (g) | Polar media (3)(4) | | | | (g) | Volume ratio (1)/(2)/(3)/(4) | | | | | |
| | | | $\delta d$ | $\delta p$ | $\delta h$ | R | | $\delta d$ | $\delta p$ | $\delta h$ | R | | $\delta d$ | $\delta p$ | $\delta h$ | R | | |
| Ex. 1 | ETFE1 | 0.20 | n-Heptane | | | | 9.40 | N,N-Dimethylformamide | | | | 9.50 | 58/42 | | | | 1 | 150 |
| | | | 15.3 | 0.0 | 0.0 | 51.6 | | 17.4 | 13.7 | 11.3 | 124.6 | | 16.2 | 5.8 | 4.7 | 1.1 | | |
| Ex. 2 | ETFE1 | 0.20 | n-Heptane | | | | 6.80 | 1-Methyl-2-pyrrolidone | | | | 10.30 | 50/50 | | | | 1 | 170 |
| | | | 15.3 | 0.0 | 0.0 | 51.6 | | 18.0 | 12.3 | 7.2 | 73.1 | | 16.7 | 6.2 | 3.6 | 4.3 | | |
| Ex. 3 | ETFE1 | 2.80 | n-Octane | | | | 14.00 | N,N-Dimethylformamide | | | | 11.10 | 63/37 | | | | 10 | 160 |
| | | | 15.5 | 0.0 | 0.0 | 51.1 | | 17.4 | 13.7 | 11.3 | 124.6 | | 16.2 | 5.1 | 4.2 | 1.4 | | |
| Ex. 4 | ETFE1 | 0.23 | n-Octane | | | | 10.50 | 1-Propanol | | | | 4.47 | 59/22/19 | | | | 1 | 190 |
| | | | 15.5 | 0.0 | 0.0 | 51.1 | | 16.0 | 6.8 | 17.4 | 173.2 | | | | | | | |
| | | | - | | | | - | Propylene carbonate | | | | 5.84 | 16.5 | 4.9 | 4.6 | 3.0 | | |
| | | | - | - | - | - | | 20.0 | 18.0 | 4.1 | 225.3 | | | | | | | |
| Ex. 5 | ETFE1 | 0.27 | n-Octane | | | | 12.60 | $\gamma$-Butyrolactone | | | | 8.81 | 60/26/14 | | | | 1 | 180 |
| | | | 15.5 | 0.0 | 0.0 | 51.1 | | 18.0 | 16.6 | 7.4 | 149.6 | | | | | | | |
| | | | - | | | | - | 1-Propanol | | | | 3.36 | 16.2 | 5.3 | 4.4 | 1.3 | | |
| | | | - | - | - | - | | 16.0 | 6.8 | 17.4 | 173.2 | | | | | | | |
| Ex. 6 | ETFE1 | 0.26 | n-Octane | | | | 10.50 | Propionitrile | | | | 8.66 | 50/37/13 | | | | 1 | 170 |
| | | | 15.5 | 0.0 | 0.0 | 51.1 | | 15.3 | 14.3 | 5.5 | 76.0 | | | | | | | |
| | | | - | | | | - | Methylbenzoate | | | | 4.25 | 15.9 | 6.4 | 2.6 | 3.3 | | |
| | | | - | - | - | - | | 18.9 | 8.2 | 4.7 | 47.4 | | | | | | | |

EP 2 559 729 A1

| | Fluorinated copolymer | | Hansen solubility parameters and dissolution indices (R) | | | | | | | | | | | | | | | | | | Polymer concentration (mass%) | Dissolution temp. (°C) |
|---|---|---|---|---|---|---|---|---|---|---|---|---|---|---|---|---|---|---|---|---|---|---|
| | | | Media constituting medium mixture | | | | | | | | | | | | Medium mixture | | | | | | | |
| | Type | (g) | Non-polar media (1)(2) | | | | (g) | Polar media (3)(4) | | | | | (g) | Volume ratio (1)/(2)/(3)/(4) | | | | | | | |
| | | | $\delta d$ | $\delta p$ | $\delta h$ | R | | $\delta d$ | $\delta p$ | $\delta h$ | R | | | $\delta d$ | $\delta p$ | $\delta h$ | R | | | |
| Ex. 7 | ETFE1 | 0.26 | n-Octane | | | | 10.71 | Propionitrile | | | | 8.89 | | 51/38/11 | | | | | 1 | 160 |
| | | | 15.5 | 0.0 | 0.0 | 51.1 | | 15.3 | 14.3 | 5.5 | 76.0 | | | | | | | | | |
| | | | - | | | | - | Acetophenone | | | | 3.40 | | 15.8 | 6.4 | 2.5 | 3.7 | | | |
| | | | - | - | - | - | | 18.8 | 9.0 | 4.0 | 49.4 | | | | | | | | | |
| Ex. 8 | ETFE1 | 0.26 | n-Octane | | | | 8.40 | Propionitrile | | | | 7.96 | | 40/34/26 | | | | | 1 | 180 |
| | | | 15.5 | 0.0 | 0.0 | 51.1 | | 15.3 | 14.3 | 5.5 | 76.0 | | | | | | | | | |
| | | | - | | | | - | Anisole | | | | 7.80 | | 16.0 | 6.0 | 3.7 | 0.9 | | | |
| | | | - | - | - | - | | 17.8 | 4.4 | 6.9 | 26.1 | | | | | | | | | |
| Ex. 9 | ETFE1 | 0.23 | n-Decane | | | | 9.13 | 1,3-Dimethyl-2-imidazolidinone | | | | 12.23 | | 52/48 | | | | | 1 | 190 |
| | | | 15.7 | 0.0 | 0.0 | 51.0 | | 17.3 | 9.3 | 10.4 | 60.4 | | | 16.5 | 4.5 | 5.0 | 4.4 | | | |
| Ex. 10 | ETFE 1 | 0.22 | n-Decane | | | | 9.13 | Propionitrile | | | | 6.22 | | 47/30/23 | | | | | 1 | 180 |
| | | | 15.7 | 0.0 | 0.0 | 51.0 | | 15.3 | 14.3 | 5.5 | 76.0 | | | | | | | | | |
| | | | - | | | | - | Propylene glycol monomethyl ether | | | | 5.63 | | 15.6 | 5.7 | 4.3 | 0.1 | | | |
| | | | - | - | - | - | | 15.6 | 6.3 | 11.6 | 53.7 | | | | | | | | | |

TABLE 2

| | Fluorinated copolymer | | Hansen solubility parameters and dissolution indices (R) | | | | | | | | | | | | | | | | | Polymer concentration (mass%) | Dissolution temp. (°C) |
| | | | Media constituting medium mixture | | | | | | | | | | | | Medium mixture | | | | | | | |
| | Type | (g) | Non-polar media (1)(2) | | | | (g) | Polar media (3)(4) | | | | (g) | Volume ratio (1)/(2)/(3)/(4) | | | | | | | | |
| | | | $\delta d$ | $\delta p$ | $\delta h$ | R | | $\delta d$ | $\delta p$ | $\delta h$ | R | | $\delta d$ | $\delta p$ | $\delta h$ | R | | |
| Ex. 11 | ETFE1 | 0.22 | n-Decane | | | | 10.95 | Propionitrile | | | | 6.46 | 58/32/10 | | | | 1 | 180 |
| | | | 15.7 | 0.0 | 0.0 | 51.0 | | 15.3 | 14.3 | 5.5 | 76.0 | | | | | | | |
| | | | - | | | | - | Ethylene glycol | | | | 2.90 | 15.7 | 5.7 | 4.4 | 0.0 | | |
| | | | - | - | - | - | | 17.0 | 11.0 | 26.0 | 505.7 | | | | | | | |
| Ex. 12 | ETFE1 | 0.23 | Cyclohexane | | | | 14.85 | Fluorinated alcohol 1 | | | | 7.80 | 50/50 | | | | 1 | 170 |
| | | | 16.8 | 0.0 | 0.2 | 54.1 | | 14.6 | 4.2 | 11.2 | 54.7 | | 15.7 | 2.1 | 5.7 | 14.9 | | |
| Ex. 13 | ETFE1 | 0.20 | Methylcyclohexane | | | | 10.60 | Propionitrile | | | | 6.80 | 55/35/10 | | | | 1 | 170 |
| | | | 16.0 | 0.0 | 1.0 | 43.7 | | 15.3 | 14.3 | 5.5 | 76.0 | | | | | | | |
| | | | - | | | | - | 1-Propanol | | | | 2.00 | 15.8 | 5.7 | 4.2 | 0.0 | | |
| | | | - | - | - | - | | 16.0 | 6.8 | 17.4 | 173.2 | | | | | | | |
| Ex. 14 | ETFE1 | 0.24 | Methylcyclohexane | | | | 11.60 | Acetonitrile | | | | 4.96 | 59/25/16 | | | | 1 | 150 |
| | | | 16.0 | 0.0 | 1.0 | 43.7 | | 15.3 | 18.0 | 6.1 | 155.2 | | | | | | | |
| | | | - | | | | - | Acetic acid | | | | 4.27 | 15.6 | 5.8 | 4.3 | 0.1 | | |
| | | | - | - | - | - | | 14.5 | 8.0 | 13.5 | 95.7 | | | | | | | |
| Ex. 15 | ETFE1 | 0.28 | Methylcyclohexane | | | | 11.60 | Acetonitrile | | | | 7.12 | 46/28/26 | | | | 1 | 150 |
| | | | 16.0 | 0.0 | 1.0 | 43.7 | | 15.3 | 18.0 | 6.1 | 155.2 | | | | | | | |
| | | | - | | | | - | Cyclohexylamine | | | | 7.38 | 16.1 | 5.8 | 3.9 | 0.9 | | |
| | | | - | - | - | - | | 17.2 | 3.1 | 6.5 | 20.6 | | | | | | | |
| Ex. 16 | ETFE1 | 0.62 | 1H-Perfluorohexane | | | | 19.72 | N,N-Dimethylformamide | | | | 9.45 | 54/46 | | | | 2 | 150 |
| | | | 13.3 | 0.0 | 0.0 | 74.0 | | 17.4 | 13.7 | 11.3 | 124.6 | | 15.2 | 6.3 | 5.2 | 2.2 | | |

| | Fluorinated copolymer | | Hansen solubility parameters and dissolution indices (R) | | | | | | | | | | | | | | | Polymer concentration (mass%) | Dissolution temp. (°C) |
|---|---|---|---|---|---|---|---|---|---|---|---|---|---|---|---|---|---|---|---|
| | | | Media constituting medium mixture | | | | | | | | | | | Medium mixture | | | | | |
| | Type | (g) | Non-polar media (1)(2) | | | | (g) | Polar media (3)(4) | | | | (g) | Volume ratio (1)/(2)/(3)/ (4) | | | | | | |
| | | | δd | δp | δh | R | | δd | δp | δh | R | | δd | δp | δh | R | | | |
| Ex. 17 | ETFE1 | 0.93 | 1H-Perfluorohexane | | | | 18.90 | 1-Methyl-2-pyrrolidone | | | | 10.30 | 53/47 | | | | | 3 | 150 |
| | | | 13.3 | 0.0 | 0.0 | 74.0 | | 18.0 | 12.3 | 7.2 | 73.1 | | 15.5 | 5.8 | 3.4 | 1.0 | | | |
| Ex. 18 | ETFE1 | 1.94 | 1H-Perfluorohexane | | | | 25.20 | Dimethyl sulfoxide | | | | 11.00 | 60/40 | | | | | 5 | 170 |
| | | | 13.3 | 0.0 | 0.0 | 74.0 | | 18.4 | 16.4 | 10.2 | 178.5 | | 15.3 | 6.6 | 4.1 | 1.3 | | | |
| Ex. 19 | ETFE1 | 0.27 | HFC-76-13sf | | | | 18.37 | N,N-Dimethylformamide | | | | 8.36 | 57/43 | | | | | 1 | 150 |
| | | | 14.3 | 0.1 | 0.0 | 57.7 | | 17.4 | 13.7 | 11.3 | 124.6 | | 15.6 | 5.9 | 4.9 | 0.4 | | | |
| Ex. 20 | ETFE1 | 0.27 | HFC-76-13sf | | | | 15.66 | 1-Methyl-2-pyrrolidone | | | | 10.26 | 49/51 | | | | | 1 | 160 |
| | | | 14.3 | 0.1 | 0.0 | 57.7 | | 18.0 | 12.3 | 7.2 | 73.1 | | 16.2 | 6.3 | 3.7 | 1.7 | | | |

EP 2 559 729 A1

TABLE 3

| | Fluorinated copolymer | | Hansen solubility parameters and dissolution indices (R) | | | | | | | | | | | | | | | | | | Polymer concentration (mass%) | Dissolution temp. (°C) |
|---|---|---|---|---|---|---|---|---|---|---|---|---|---|---|---|---|---|---|---|---|---|---|---|
| | | | Media constituting medium mixture | | | | | | | | | | | Medium mixture | | | | | | | | | |
| | Type | (g) | Non-polar media (1)(2) | | | | (g) | Polar media (3)(4) | | | | (g) | Volume ratio (1)/(2)/(3)/(4) | | | | | | | | | | |
| | | | $\delta d$ | $\delta p$ | $\delta h$ | R | | $\delta d$ | $\delta p$ | $\delta h$ | R | | $\delta d$ | $\delta p$ | $\delta h$ | R | | | | | |
| Ex. 21 | ETFE1 | 0.30 | HFC-76-13sf | | | | 22.50 | Acetonitrile | | | | 7.80 | 59/41 | | | | | | | | | 1 | 160 |
| | | | 14.3 | 0.1 | 0.0 | 57.7 | | 15.3 | 18.0 | 6.1 | 155.2 | | 14.7 | 7.4 | 2.5 | 10.2 | | | | | | | |
| Ex. 22 | ETFE1 | 0.45 | HFE-347pcf2 | | | | 34.30 | N,N-Dimethylformamide | | | | 9.45 | 70/30 | | | | | | | | | 1 | 180 |
| | | | 14.3 | 3.4 | 2.2 | 17.5 | | 17.4 | 13.7 | 11.3 | 124.6 | | 15.2 | 6.5 | 4.9 | 1.9 | | | | | | | |
| Ex. 23 | ETFE1 | 0.37 | HFE-347pcf2 | | | | 25.00 | 1-Methyl-2-pyrrolidone | | | | 10.30 | 63/37 | | | | | | | | | 1 | 180 |
| | | | 14.3 | 3.4 | 2.2 | 17.5 | | 18.0 | 11.3 | 7.2 | 73.1 | | 15.7 | 6.7 | 4.1 | 1.1 | | | | | | | |
| Ex. 24 | ETFE1 | 0.30 | o-Xylene | | | | 20.30 | N,N-Dimethylformamide | | | | 9.50 | 70/30 | | | | | | | | | 1 | 180 |
| | | | 17.8 | 1.0 | 3.1 | 41.2 | | 17.4 | 13.7 | 11.3 | 124.6 | | 17.7 | 4.8 | 5.6 | 18.1 | | | | | | | |
| Ex. 25 | ETFE1 | 0.40 | Chlorobenzene | | | | 11.10 | Fluorinated alcohol 2 | | | | 23.90 | 40/60 | | | | | | | | | 1 | 160 |
| | | | 19.0 | 4.3 | 2.0 | 50.8 | | 14.0 | 2.2 | 5.8 | 26.1 | | 16.0 | 3.0 | 4.3 | 7.4 | | | | | | | |
| Ex. 26 | ETFE1 | 0.30 | Cyclohexane | | | | 10.80 | Acetonitrile | | | | 5.40 | 50/14/23/13 | | | | | | | | | 1 | 160 |
| | | | 16.8 | 0.0 | 0.2 | 54.1 | | 15.3 | 18.0 | 6.1 | 155.2 | | | | | | | | | | | | |
| | | | 1H-Perfluorohexane | | | | 7.10 | Methanol | | | | 3.10 | 15.7 | 5.7 | 4.4 | 0.0 | | | | | | | |
| | | | 13.3 | 0.0 | 0.0 | 74.0 | | 14.7 | 12.3 | 22.3 | 371.6 | | | | | | | | | | | | |

EP 2 559 729 A1

| | Fluorinated copolymer | | Hansen solubility parameters and dissolution indices (R) | | | | | | | | | | | | | | | | Polymer concentration (mass%) | Dissolution temp. (°C) |
|---|---|---|---|---|---|---|---|---|---|---|---|---|---|---|---|---|---|---|---|---|
| | | | Media constituting medium mixture | | | | | | | | | | | | Medium mixture | | | | | |
| | Type | (g) | Non-polar media (1)(2) | | | | (g) | Polar media (3)(4) | | | | (g) | Volume ratio (1)/(2)/(3)/(4) | | | | | | | |
| | | | $\delta d$ | $\delta p$ | $\delta h$ | R | | $\delta d$ | $\delta p$ | $\delta h$ | R | | | | | | $\delta d$ | $\delta p$ | $\delta h$ | R | | |
| Ex. 27 | ETFE1 | 0.34 | o-Xylene | | | | 7.59 | N,N-Dimethylacetamide | | | | 11.75 | 30/27/43 | | | | | | | 1 | 150 |
| | | | 17.8 | 1.0 | 3.1 | 41.2 | | 16.8 | 11.5 | 9.4 | 64.5 | | | | | | | | | | |
| | | | HFC-43-10mee | | | | 12.56 | - | | | | - | 15.7 | 5.2 | 5.0 | 0.7 | | | | | |
| | | | 11.6 | 0.0 | 0.0 | 118.2 | | - | - | - | - | | | | | | | | | | |
| Ex. 28 | ETFE1 | 0.30 | Chlorobenzene | | | | 11.10 | Methanol | | | | 3.66 | 41/40/19 | | | | | | | 1 | 140 |
| | | | 19.0 | 4.3 | 2.0 | 50.8 | | 14.7 | 12.3 | 22.3 | 371.6 | | | | | | | | | | |
| | | | 1H-Perfluorohexane | | | | 16.40 | - | | | | - | 15.9 | 4.1 | 5.1 | 3.3 | | | | | |
| | | | 13.3 | 0.0 | 0.0 | 74.0 | | - | - | - | - | | | | | | | | | | |
| Ex. 29 | ETFE1 | 0.40 | HCFC-225ca/cb(45/55) | | | | 23.25 | N,N-Dimethylformamide | | | | 7.84 | 47/27/26 | | | | | | | 1 | 150 |
| | | | 13.9 | 3.2 | 1.0 | 30.1 | | 17.4 | 13.7 | 11.3 | 124.6 | | | | | | | | | | |
| | | | Toluene | | | | 7.50 | - | | | | - | 15.9 | 5.4 | 3.9 | 0.4 | | | | | |
| | | | 18.0 | 1.4 | 2.0 | 44.9 | | - | - | - | - | | | | | | | | | | |
| Ex. 30 | ETFE1 | 0.41 | HCFC-225ca/cb(45/55) | | | | 23.25 | Sulfolane | | | | 8.73 | 50/27/23 | | | | | | | 1 | 160 |
| | | | 13.9 | 3.2 | 1.6 | 30.1 | | 17.8 | 17.4 | 8.7 | 173.9 | | | | | | | | | | |
| | | | o-Xylene | | | | 7.05 | - | | | | - | 15.9 | 5.9 | 3.3 | 1.0 | | | | | |
| | | | 17.8 | 1.0 | 3.1 | 41.2 | | - | - | - | - | | | | | | | | | | |

TABLE 4

Hansen solubility parameters and dissolution indices (R)

| | Fluorinated copolymer | | Media constituting medium mixture | | | | | | | | | | | Medium mixture | | | | | Polymer concentration (mass%) | Dissolution temp. (°C) |
|---|---|---|---|---|---|---|---|---|---|---|---|---|---|---|---|---|---|---|---|---|
| | | | Non-polar media (1)(2) | | | | | | Polar media (3)(4) | | | | | | Volume ratio (1)/(2)/(3)/(4) | | | | | | |
| | Type | g) | | δd | δp | δh | R | (g) | | δd | δp | δh | R | (g) | | δd | δp | δh | R | | |
| Ex. 31 | ETFE1 | 0.46 | HFE-7300 | 12.5 | 2.0 | 0.8 | 66.9 | 16.60 | Propionitrile | 15.3 | 14.3 | 5.5 | 76.0 | 12.57 | 34/33/33 | 15.8 | 6.1 | 3.0 | 1.7 | 1 | 160 |
| | | | Tetralin | 19.6 | 2.0 | 2.9 | 41.2 | 15.63 | - | - | - | - | - | - | | | | | | | |
| Ex. 32 | ETFE1 | 0.33 | HFE-449s1 | 13.7 | - | 1.0 | 39.1 | 19.00 | N,N-Dimethylformamide | 17.4 | 13.7 | 11.3 | 124.6 | 7.47 | 49/20/31 | 15.7 | 5.5 | 4.6 | 0.1 | 1 | 160 |
| | | | o-Xylene | 17.8 | 1.0 | 3.1 | 41.2 | 4.44 | - | - | - | - | - | - | | | | | | | |
| Ex. 33 | ETFE1 | 0.43 | Chlorobenzene | 19.0 | 4.3 | 2.0 | 50.8 | 29.70 | - | - | - | - | - | - | 58/42 | 16.6 | 2.5 | 1.2 | 23.4 | 1 | 170 |
| | | | 1H-Perfluorohexane | 13.3 | 0.0 | 0.0 | 74.0 | 11.10 | - | - | - | - | - | - | | | | | | | |
| Ex. 34 | ETFE1 | 0.25 | - | - | - | - | - | - | Benzonitrile | 18.8 | 12.0 | 3.3 | 79.1 | 7.58 | 43/57 | 15.6 | 7.0 | 5.9 | 4.4 | 1 | 170 |
| | | | - | - | - | - | - | - | Fluorinated alcohol 3 | 13.1 | 3.2 | 7.9 | 46.3 | 15.91 | | | | | | | |
| Ex. 35 | ETFE2 | 2.80 | n-Octane | 15.5 | 0.0 | 0.0 | 51.1 | 14.00 | N,N-Dimethylformamide | 17.4 | 13.7 | 11.3 | 124.6 | 11.10 | 63/37 | 16.2 | 5.1 | 4.2 | 1.4 | 10 | 200 |

| | Fluorinated copolymer | | Hansen solubility parameters and dissolution indices (R) | | | | | | | | | | | | | | | Polymer concentration (mass%) | Dissolution temp. (°C) |
|---|---|---|---|---|---|---|---|---|---|---|---|---|---|---|---|---|---|---|---|
| | | | Media constituting medium mixture | | | | | | | | | | Medium mixture | | | | | | |
| | Type | g) | Non-polar media (1)(2) | | | | (g) | Polar media (3)(4) | | | | (g) | Volume ratio (1)/(2)/(3)/(4) | | | | | | |
| | | | $\delta d$ | $\delta p$ | $\delta h$ | R | | $\delta d$ | $\delta p$ | $\delta h$ | R | | $\delta d$ | $\delta p$ | $\delta h$ | R | | | |
| Ex. 36 | ETFE2 | 0.21 | 1,2-Dimethylcyclohexane | | | | 11.46 | Acetonitrile | | | | 5.27 | 58/27/15 | | | | 1 | 200 |
| | | | 16.1 | 0.0 | 1.1 | 43.4 | | 15.3 | 18.0 | 6.1 | 155.2 | | | | | | | |
| | | | - | | | | - | Isoamyl alcohol | | | | 3.04 | 15.8 | 5.6 | 4.3 | 0.1 | | |
| | | | - | - | - | - | | 15.8 | 5.2 | 13.3 | 81.3 | | | | | | | |

In Tables 2 to 4, fluorinated alcohols 1 to 3 represent the following alcohols.

Fluorinated alcohol 1: 2,2,3,3-Tetrafluoro-1-propanol

Fluorinated alcohol 2: 3,3,4,4,5,5,6,6,6-Nonafluoro-1-hexanol

Fluorinated alcohol 3: 2,2,3,3,4,4,4-Heptafluoro-1-butanol

Further, in Table 3, HCFC-225ca/cb (45/55) represents a mixture prepared by mixing HCFC-225ca and HCFC-225cb in a ratio of 45:55 (mass ratio).

Now, an application example to form a thin film by coating of the fluorinated copolymer composition of the present invention will be described.

[Application example]

In a 50 mL pressure resistant glass reactor, 0.30 g of ETFE (constituting monomers and molar ratio:

tetrafluoroethylene/ethylene/hexafluoropropylene/3,3,4,4,5,5,6,6,6-nonafluoro-1-hexene/itaconic anhydride = 47.7/42.5/8.4/1.2/0.2, melting point: 188°C, hereinafter referred to as "ETFE3") as the fluorinated copolymer, 15.90 g of methylcyclohexane as a non-polar medium, and 10.20 g of propionitrile and 3.00 g of 1-propanol, as polar media (R of medium mixture = 0.0) were put and heated to 140°C with stirring, whereby dissolution was confirmed. The reactor containing this solution was taken out from an oil bath, and stirring was continued to obtain a slightly turbid suspension. This suspension was applied on a glass plate of 7 cm square at room temperature and dried for 5 minutes, followed by heating on a hot plate at 150°C for 10 minutes to evaporate the solvent. Then, the electric power for the hot plate was switched off for cooling to obtain a substrate having a thin film of ETFE3 formed on its surface.

The surface of the obtained thin film of ETFE3 was observed by a scanning electron microscope, whereby it was confirmed that this thin film of ETFE3 was a formed product having a homogeneous and dense structure. The film thickness was measured by means of a Digimatic Indicator ID-C112 (manufactured by Mitutoyo Corporation) and found to be 2 $\mu$m. Further, with respect to the surface of the obtained thin film of ETFE3, the contact angles of water and n-hexadecane were measured by means of an automatic contact angle meter DM500 (manufactured by Kyowa Interface Science Co., Ltd) and found to be 105.3° and 52.4°, respectively, whereby it was found that this thin film of ETFE3 was excellent in water repellency and oil repellency.

INDUSTRIAL APPLICABILITY

From the fluorinated copolymer composition of the present invention, it is possible to prepare a thin film easily by coating, and it is suitable for applications to e.g. surface treatment of substrates which require e.g. heat resistance, flame retardancy, chemical resistance, weather resistance, low frictional properties, low dielectric properties, transparency, etc.

The entire disclosure of Japanese Patent Application No. 2010-095262 filed on April 16, 2010 including specification, claims and summary is incorporated herein by reference in its entirety.

**Claims**

1. A fluorinated copolymer composition comprising a fluorinated copolymer containing repeating units derived from ethylene and repeating units derived from tetrafluoroethylene, and a medium mixture composed of at least two members selected from media, each of which does not by itself dissolve the fluorinated copolymer in a concentration of at least 1 mass% at a temperature of not higher than the melting point of the fluorinated copolymer, and having a temperature range to exhibit a uniform solution state at a temperature of not higher than the melting point of the fluorinated copolymer, wherein, of the medium mixture, the dissolution index (R) for the fluorinated copolymer, based on Hansen solubility parameters and represented by the following formula (1), is less than 25:

$$R = 4 \times (\delta d - 15.7)^2 + (\delta p - 5.7)^2 + (\delta h - 4.3)^2 \quad (1)$$

wherein $\delta d$, $\delta p$ and $\delta h$ represent the dispersion component, the polar component and the hydrogen bonding component, respectively, in Hansen solubility parameters, and their units are $(MPa)^{1/2}$, respectively.

**2.** The fluorinated copolymer composition according to Claim 1, wherein the medium mixture is composed of a combination of at least one member selected from non-polar media, of which the index (S) based on Hansen solubility parameters and represented by the following formula (2) is less than 6, and at least one member selected from polar media, of which the above index (S) is at least 6, a combination of at least two members selected from the above non-polar media, or a combination of at least two members selected from the above polar media:

$$S=(\delta p^2+\delta h^2)^{1/2} \quad (2)$$

wherein $\delta p$ and $\delta h$ represent the polar component and the hydrogen bonding component, respectively, in Hansen solubility parameters, and their units are $(MPa)^{1/2}$, respectively.

**3.** The fluorinated copolymer composition according to Claim 2, wherein the non-polar media are at least one member selected from the group consisting of a $C_{1-20}$ aliphatic hydrocarbon which may have a halogen atom and/or an etheric oxygen atom, and a $C_{6-20}$ aromatic hydrocarbon which may have a halogen atom.

**4.** The fluorinated copolymer composition according to Claim 2 or 3, wherein the polar media are at least one member selected from the group consisting of a $C_{1-20}$ aliphatic hydrocarbon which may have a halogen atom and/or an etheric oxygen atom (said aliphatic hydrocarbon contains at least one polar group selected from the group consisting of a hydroxyl group, a carboxy group, a cyclic ester, a cyclic carbonate, a cyano group, a nitro group, an amido group, an amino group, a urea group, a sulfide group, a sulfoxide group, a sulfone group, a sulfonic acid group, a sulfonic acid ester group, and a phosphoric acid ester group), and a $C_{4-20}$ aromatic hydrocarbon which may have a halogen atom (said aromatic hydrocarbon contains at least one polar group selected from the group consisting of a hydroxyl group, a carboxy group, an ester group, a ketone group, an ether group, a cyano group, a nitro group, an amido group, an amino group, a sulfide group, a sulfoxide group, a sulfone group, a sulfonic acid group and a sulfonic acid ester group).

**5.** The fluorinated copolymer composition according to any one of Claims 1 to 4, wherein the boiling point of the medium mixture is at least 50°C and at most 230°C.

**6.** The fluorinated copolymer composition according to any one of Claims 1 to 5, wherein the dissolution temperature being the lower limit temperature within the temperature range for the fluorinated copolymer composition to exhibit the solution state, is not higher than 230°C.

**7.** The fluorinated copolymer composition according to any one of Claims 2 to 6, wherein the non-polar media are at least one member selected from the group consisting of an aliphatic hydrocarbon, an aliphatic hydrochlorocarbon, an aliphatic hydrofluorocarbon, an aliphatic hydrochlorofluorocarbon, an aliphatic hydrofluoroether, an aromatic hydrocarbon and an aromatic hydrochlorocarbon.

**8.** The fluorinated copolymer composition according to any one of Claims 2 to 7, wherein the polar media are at least one member selected from the group consisting of an aliphatic alcohol, a fluorinated aliphatic alcohol, an aliphatic carboxylic acid, an aliphatic lactone, an alicyclic carbonate, an aliphatic nitrile, a nitroalkane, an aliphatic amide, an aliphatic amine, an aliphatic urea compound, an aliphatic sulfide, an aliphatic sulfoxide, an aliphatic sulfone, an aliphatic sulfonic acid, an aliphatic sulfonic acid ester, an aliphatic sultone, an aliphatic phosphoric acid ester, a phenol, an aromatic carboxylic acid, an aromatic ester, an aromatic ketone, an aromatic ether, an aromatic nitrile, an aromatic nitro compound, an aromatic amide, an aromatic amine, an aromatic sulfide, an aromatic sulfoxide, an aromatic sulfone, an aromatic sulfonic acid and an aromatic sulfonic acid ester.

**9.** The fluorinated copolymer composition according to any one of Claims 1 to 8, wherein within the temperature range for the fluorinated copolymer composition to exhibit the solution state, the vapor pressure of the solution is within a range of at least not higher than naturally occurring pressure.

**10.** A process for producing the fluorinated copolymer composition as defined in any one of Claims 1 to 9, which has a step of dissolving the fluorinated copolymer containing repeating units derived from ethylene and repeating units derived from tetrafluoroethylene, in the medium mixture at a temperature of not higher than the melting point of the fluorinated copolymer.

11. The process for producing the fluorinated copolymer composition according to Claim 10, wherein said temperature is a temperature lower by at least 30°C than the melting point of the fluorinated copolymer.

**INTERNATIONAL SEARCH REPORT**

International application No.

PCT/JP2011/059299

A.   CLASSIFICATION OF SUBJECT MATTER

*C08L23/08*(2006.01)i, *C08K5/00*(2006.01)i, *C08L27/18*(2006.01)i

According to International Patent Classification (IPC) or to both national classification and IPC

B.   FIELDS SEARCHED

Minimum documentation searched (classification system followed by classification symbols)

C08L23/08, C08K5/00, C08L27/18

Documentation searched other than minimum documentation to the extent that such documents are included in the fields searched

| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

WPI

C.   DOCUMENTS CONSIDERED TO BE RELEVANT

| Category* | Citation of document, with indication, where appropriate, of the relevant passages | Relevant to claim No. |
|---|---|---|
| X<br>A | WO 2008/069278 A1  (Asahi Glass Co., Ltd.),<br>12 June 2008 (12.06.2008),<br>claims; examples<br>& US 2009/0301752 A1    & EP 2090595 A1 | 1-9<br>10,11 |
| Y | JP 61-111376 A  (Mitsubishi Petrochemical Co., Ltd.),<br>29 May 1986 (29.05.1986),<br>claims; page 2, upper left column, lines 11 to 16<br>(Family: none) | 1-11 |
| Y | JP 2002-256217 A  (Asahi Glass Co., Ltd.),<br>11 September 2002 (11.09.2002),<br>claims; paragraphs [0022] to [0032]<br>(Family: none) | 1-11 |

| ☒ | Further documents are listed in the continuation of Box C. | ☐ | See patent family annex. |

\*      Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>23 June, 2011 (23.06.11) | Date of mailing of the international search report<br>05 July, 2011 (05.07.11) |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/059299

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | JP 2002-020676 A (Asahi Glass Co., Ltd.),<br>23 January 2002 (23.01.2002),<br>paragraph [0004]<br>(Family: none) | 1-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2412960 A
- US 2448952 A
- US 2484483 A
- US 4933388 A
- JP 2000503731 A
- JP 2010095262 A